(19) **Europäisches Patentamt**
**European Patent Office**
**Office européen des brevets**

(11) **EP 2 944 134 B1**

(12) **EUROPEAN PATENT SPECIFICATION**

(45) Date of publication and mention
of the grant of the patent:
**04.12.2019 Bulletin 2019/49**

(21) Application number: **14738246.9**

(22) Date of filing: **14.01.2014**

(51) Int Cl.:
*H04W 52/36* (2009.01)   *H04L 25/02* (2006.01)
*H04W 52/24* (2009.01)   *H04W 52/32* (2009.01)
*H04W 72/04* (2009.01)   *H04W 52/14* (2009.01)
*H04L 5/00* (2006.01)   *H04W 52/22* (2009.01)
*H04W 88/02* (2009.01)   *H04W 52/40* (2009.01)
*H04W 52/10* (2009.01)   *H04W 88/08* (2009.01)

(86) International application number:
**PCT/SE2014/050032**

(87) International publication number:
**WO 2014/109707 (17.07.2014 Gazette 2014/29)**

(54) **HANDLING UPLINK TRANSMIT POWER REPORTING**

HANDHABUNG VON UPLINK-SENDELEISTUNGSMELDUNGEN

PRISE EN CHARGE DE RAPPORT SUR LA PUISSANCE D'ÉMISSION DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2013 US 201361752153 P**

(43) Date of publication of application:
**18.11.2015 Bulletin 2015/47**

(73) Proprietor: **Telefonaktiebolaget LM Ericsson
(publ)**
**164 83 Stockholm (SE)**

(72) Inventors:
• **SORRENTINO, Stefano**
  **SE-171 68 Solna (SE)**
• **ANDERSSON, Håkan**
  **SE-585 99 Linköping (SE)**
• **FRÖBERG OLSSON, Jonas**
  **SE-590 74 Ljungsbro (SE)**
• **LARSSON, Daniel**
  **SE-186 53 Vallentuna (SE)**

(74) Representative: **Brann AB**
**P.O. Box 3690**
**Drottninggatan 27**
**103 59 Stockholm (SE)**

(56) References cited:
**WO-A1-2011/159222   WO-A1-2012/020539**

WO-A1-2012/149968   US-A1- 2010 273 515
US-A1- 2011 243 106

• **NTT DOCOMO: "Views on UL power control for
HetNet scenario", 3GPP DRAFT; R1-112432
ULTPC, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Athens, Greece; 20110822, 16 August
2011 (2011-08-16), XP050537536, [retrieved on
2011-08-16]**
• **LG ELECTRONICS: "SRS Enhancements for
CoMP in Rel-11", 3GPP DRAFT; R1-120443 SRS
ENHANCEMENTS FOR COMP IN REL-11, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Dresden,
Germany; 20120206 - 20120210, 31 January 2012
(2012-01-31), XP050562931, [retrieved on
2012-01-31]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **LG ELECTRONICS: '3GPP Draft; R1-120443 SRS Enhancements for CoMP in Rel- 11' 3RD GENERATION PARTNERSHIP PROJECT (3GPP 31 January 2012, 650, ROUTE DES LUCIOLES ; F-06921 SOPHIA-ANTIPOLIS CEDEX ; FRANCE, pages 1 - 3, XP050562931 Retrieved from the Internet: <URL:http://www.3gpp.org/ftp/tsg_ran/WG1-RL 1/TSGR1-68/Docs/R 1-120443.zip> [retrieved on 2014-04-17]**
- **CATT;: '3GPP Draft; R1-100023 Considerations on Enhanced SRS Transmission Schemes' 3RD GENERATION PARTNERSHIP PROJECT 12 January 2010, 650, ROUTE DES LUCIOLES ; F-06921 SOPHIA-ANTIPOLIS CEDEX ; FRANCE, pages 1 - 3, XP050417779 Retrieved from the Internet: <URL:http://www.3gpp.org/ftp/tsg ran/WG1_RL1/TSGR1 59b/Docs/ R1-100023.zip> [retrieved on 2014-04-17]**
- **QUALCOMM INCORPORATED: '3GPP Draft; R1-120555 SRS enhancements for UL CoMP' 3RD GENERATION PARTNERSHIP PROJECT 13 January 2012, 650, ROUTE DES LUCIOLES ; F-06921 SOPHIA-ANTIPOLIS CEDEX ; FRANCE, pages 1 - 3, XP050562993 Retrieved from the Internet: <URL:http://www.3gpp.org/ftp/tsg ran/WG1_RL1/TSGR1 68/Docs/R 1-120555.zip> [retrieved on 2014-04-17]**

**Description**

TECHNICAL FIELD

Embodiments herein relate to a method performed by a wireless terminal, a wireless terminal, a method performed by a network node comprised in a cellular radio system, such as a telecommunications system, and to such network node. In particular embodiments herein relate to handling of uplink transmit power reporting in a radio access network of the cellular radio system.

BACKGROUND

Communication devices such as wireless devices may be also known as e.g. user equipments (UEs), mobile terminals, wireless terminals and/or mobile stations. A wireless device is enabled to communicate wirelessly in a cellular communications network, wireless communications system, or radio communications system, sometimes also referred to as a cellular radio system, cellular network, cellular communications system or simply cellular system. A typical example of such system or network, depending on terminology used, is a telecommunications system for mobile communications. The communication may be performed e.g. between two wireless devices, between a wireless device and a regular telephone and/or between a wireless device and a server via a Radio Access Network (RAN) and possibly one or more core networks, comprised within the cellular communications network. The wireless device may further be referred to as a mobile telephone, cellular telephone, laptop, Personal Digital Assistant (PDA), tablet computer, just to mention some further examples. The wireless device may be, for example, portable, pocket-storable, hand-held, computer-comprised, or vehicle-mounted mobile device, enabled to communicate voice and/or data, via the RAN, with another entity, such as another wireless device or a server.

The cellular communications network covers a geographical area which is divided into cell areas, wherein each cell area is served by at least one base station, e.g. a Radio Base Station (RBS), which sometimes may be referred to as e.g. "eNB", "eNodeB", "NodeB", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided according to a Radio Access Technology (RAT) and at a carrier frequency by the base station at a base station site. The base station may support one or several communication technologies, such as RATs. Cells may overlap so that several cells cover the same geographical area. A base station serves a cell by providing radio coverage such that one or more wireless devices or terminals located in the geographical area where the radio coverage is provided may be served by the base station. One base station may serve one or several cells. When one base station serves several cells, these may be served according to the same or different RATs, and/or may be served at same or different carrier frequencies. The base stations communicate over the air interface operating on radio frequencies with one or more wireless devices within range of the base stations.

In some RANs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile). In 3rd Generation Partnership Project (3GPP) Long Term Evolution (LTE), base stations, which may be referred to as eNodeBs or eNBs, may be directly connected to other base stations and may be directly connected to one or more core networks.

Wireless communication systems following Universal Mobile Telecommunications Systems (UMTS) technology, were developed as part of Third Generation (3G) Radio Systems, and is maintained by the Third Generation Partnership Project (3GPP). UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for wireless devices. High Speed Packet Access (HSPA) is an amalgamation of two mobile telephony protocols, High Speed Downlink Packet Access (HSDPA) and High Speed Uplink Packet Access (HSUPA), defined by 3GPP, that extends and improves the performance of existing 3rd generation mobile telecommunication networks utilizing the WCDMA. Moreover, the 3GPP has undertaken to evolve further the UTRAN and GSM based radio access network technologies, for example into evolved UTRAN (E-UTRAN) used in LTE.

The expression downlink (DL) is used for the transmission path from the RAN, typically from a base station thereof, to the wireless device. The expression uplink (UL) is used for the transmission path in the opposite direction i.e. from the wireless device to the RAN, typically to a base station thereof.

As indicated above, in a typical cellular radio system, wireless terminals, also known as mobile stations and/or UEs, communicate via a RAN to one or more core networks. The RAN covers a geographical area which is divided into cell areas, with each cell area being served by a base station, e.g., a RBS, which in some networks may also be called, for example, a "NodeB" (UMTS) or "eNodeB" (LTE). Each cell is typically identified by an identity within the local radio area, which is broadcast in the cell. The base stations communicate over the air interface operating on radio frequencies with UEs within range of the base stations. In some RANs, several base stations are typically connected (e.g., by landlines or microwave) to a controller node (such as a rRNC or a base station controller BSC which supervises and coordinates various activities of the plural base stations connected thereto. The RNCs are typically connected to one or more core networks.

Radio technologies that use higher frequencies experience increased path loss which increases with frequency. In addition, deployment in urban areas suffers from difficult propagation conditions. To combat these factors, base stations are more often deployed in ever-tighter configurations, typically with varying output power, so-called heterogeneous network deployments. As a result, the area in which a UE is physically present can be covered by or at least in range of several nodes. By periodically measuring the signal strength from several nodes, the UE can select which node it should be connected to. The process of changing connected node for a UE, i.e., the node for reception and transmission, is referred to as a handover for active connections and cell re-selection for idle UEs.

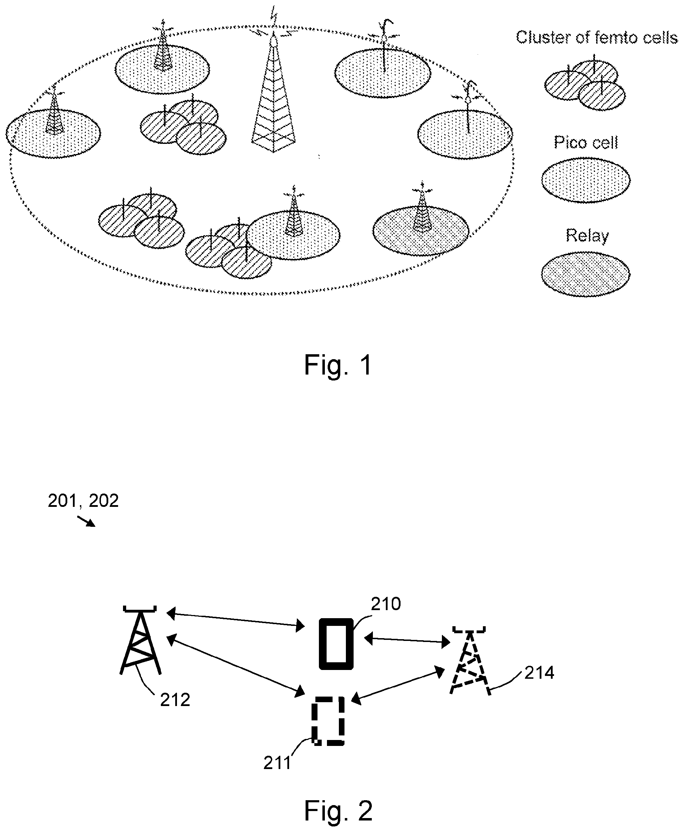

A heterogeneous network includes several nodes with different transmit powers such that coverage areas of the low-power and high-power nodes may overlap. See the example heterogeneous network shown in **Figure 1.** Consequently, a UE may receive higher DL signal strength from a high-power node than from a low-power node, even though the UE is physically closer to the low-power node than to the high-power node. In this situation, the UE also has a smaller path loss to the low-power node than to the high-power node. Given that the UE may have a best downlink to the high-power node and a best UL to the low-power node, it would be beneficial to associate the UL and the DL to different nodes with a "UL/DL decoupling" resulting. In a system that uses coordinated multipoint (CoMP) transmission and/or reception, this UL/DL decoupling is further applied to several transmit (Tx) points (i.e., physical antenna sites) and/or several receive (Rx) points. The Tx and Rx points need not be the same but the sets may (partially) overlap.

Further, in hetnets there may be imbalance regions where not the same cell offers the best DL and UL. This is another reason why it is on interest with UL and DL decoupling, i.e. where different cells serve the UL and DL. However, presently in LTE the UL is assumed to be associated with the same cell as the DL. The association is based on DL pathloss and the UL pathloss is not taken into consideration.

WO 2012/020539 A1 discloses a base station, a mobile station and a method for transmitting calculation parameters for a power headroom and a method for transmitting a power headroom capable of increasing the accuracy of link adaptation by reducing the probability that a power headroom value is out of a reported range.

WO 2012/149968 A1 describes a method to reduce network power consumption during idle periods and off peak network hours.

SUMMARY

It is an object to provide improvements facilitating UL and DL decoupling in e.g. hetnets. The object is achieved by the invention as defined by the independent claims 1 and 9-13.

According to a first example a method, performed by a wireless terminal, for handling uplink transmit power reporting in a radio access network of a cellular radio system is provided. The wireless terminal provides a respective transmit power report for at least one of multiple uplink reference signal transmission configurations comprised in the wireless terminal. Each of the multiple uplink reference signal transmission configurations configures transmission, by the wireless terminal, of an uplink reference signal. The respective transmit power report provides information about a transmit power used by the wireless terminal for transmitting the uplink reference signal on a carrier and a power headroom report assuming Physical Uplink Shared Channel, PUSCH, transmission or PUSCH and Physical Uplink Control Channel, PUCCH, transmission on the carrier, where said at least one of the multiple uplink reference signal transmission configurations is associated with a respective path loss measurement by the wireless terminal. The transmit power of the uplink reference signal according to said at least one of the multiple uplink reference signal transmission configurations is based on the respective path loss measurement associated with said at least one of the multiple uplink reference signal transmission configurations. The wireless terminal sends the respective transmit power report and the power headroom report to one or more network nodes of the cellular radio system.

According to a second example a computer program is provided that when executed by a processor causes a wireless terminal to perform the method according to the first example.

According to a third example a computer program product is provided, comprising a computer readable medium and a computer program according to the second example stored on the computer readable medium.

According to a fourth example a method, performed by a network node, for handling uplink transmit power reporting in a radio access network of a cellular radio system is provided. The network node is comprised in the cellular radio system. The network node receives, from a wireless terminal, a respective transmit power report for at least one of multiple uplink reference signal transmission configurations comprised in the wireless terminal. Each of the multiple uplink reference signal transmission configurations configures transmission, by the wireless terminal, of an uplink reference signal. The respective transmit power report provides information about a transmit power used by the wireless terminal for transmitting the uplink reference signal on a carrier and a power headroom report assuming Physical Uplink Shared Channel, PUSCH, transmission or PUSCH and Physical Uplink Control Channel, PUCCH, transmission on the carrier, where said at least one of the multiple uplink reference signal transmission configurations is associated with a respective path loss measurement by the wireless terminal. The transmit power of the uplink reference signal according to said at least one of the multiple uplink reference signal transmission configurations is based on the respective path loss measurement associated with said at least one of the multiple uplink reference signal transmission configurations.

According to a fifth example a computer program is provided that when executed by a processor causes a network node to perform the method according to the fourth example.

According to a sixth example a computer program product is provided, comprising a computer readable medium and a computer program according to the fifth example stored on the computer readable medium.

According to a seventh example a wireless terminal for handling uplink transmit power reporting in a radio access network of a cellular radio system is provided. The wireless terminal is configured to provide a respective transmit power report for at least one of multiple uplink reference signal transmission configurations comprised in the wireless terminal. Each of the multiple uplink reference signal transmission configurations configures transmission, by the wireless terminal, of an uplink reference signal. The respective transmit power report provides information about a transmit power used by the wireless terminal for transmitting the uplink reference signal on a carrier and a power headroom report assuming Physical Uplink Shared Channel, PUSCH, transmission or PUSCH and Physical Uplink Control Channel, PUCCH, transmission on the carrier, where said at least one of the multiple uplink reference signal transmission configurations is associated with a respective path loss measurement by the wireless terminal. The transmit power of the uplink reference signal according to said at least one of the multiple uplink reference signal transmission configurations is based on the respective path loss measurement associated with said at least one of the multiple uplink reference signal transmission configurations. The wireless terminal is further configured to send the respective transmit power report and the power headroom report to one or more network nodes of the cellular radio system.

According to an eighth example a network node for handling uplink transmit power reporting in a radio access network of a cellular radio system is provided. The network node is configured to be comprised in the cellular radio system. The network node is further configured to receive, from a wireless terminal, a respective transmit power report for at least one of multiple uplink reference signal transmission configurations comprised in the wireless terminal. Each of the multiple uplink reference signal transmission configurations configures transmission, by the wireless terminal, of an uplink reference signal on a carrier and a power headroom report assuming Physical Uplink Shared Channel, PUSCH, transmission or PUSCH and Physical Uplink Control Channel, PUCCH, transmission on the carrier, where said at least one of the multiple uplink reference signal transmission configurations is associated with a respective path loss measurement by the wireless terminal. The transmit power of the uplink reference signal according to said at least one of the multiple uplink reference signal transmission configurations is based on the respective path loss measurement associated with said at least one of the multiple uplink reference signal transmission configurations. The respective transmit power report provides information about a transmit power used by the wireless terminal for transmitting the uplink reference signal.

The cellular radio system may be according to or based on the LTE standard and the radio access network may be an E-UTRAN. In some embodiments the respective transmit power report comprises or corresponds to a Power Headroom Report (PHR) and the uplink reference signal comprises or corresponds to a Sounding Reference Signal (SRS) transmission.

In some embodiments the network node receives, from the wireless terminal, the uplink reference signal according to said at least one uplink reference signal transmission configuration. The network node may then determine, based on the received uplink reference signal and the received respective transmit power report, e.g. uplink quality and/or path loss associated with the wireless terminal.

The herein described aspects and handling of the respective transmit power report for at least one of the multiple uplink reference signal configurations, for example enable a first transmit power report and uplink reference signal configuration to be targeted to and used for evaluating an uplink to a base station (corresponding to the network node), or reception point thereof. The base station may e.g. be an existing or potentially new uplink serving base station (or reception point hereof) for the wireless terminal. Also, the base station may, based on the first transmit power report and uplink reference signal configuration, perform power control of the wireless terminal.

The evaluation of the uplink and/or power control of the wireless terminal may, in contrast to existing solutions, be made independently of evaluation and/or power control of a downlink, e.g. to a downlink serving base station serving the wireless terminal in the downlink.

Embodiments herein thus facilitate separate evaluation of uplink and downlink quality and separate power control of uplink and downlink, and thereby also support and facilitate uplink and downlink decoupling.

Also as should be realized, embodiments herein may be applied to accomplish additional reports and configurations, e.g. a second transmit power report for a second uplink reference signal configuration etc, for example one report for each one of said multiple configurations. Each such additional report and configuration may be targeted for, and independently used for, other uplinks and/or downlinks to other or the same base stations. When the base station is the same there may be different reception and/or transmission points involved.

Embodiments herein thus support more versatile and flexible solutions than currently offered e.g. in the LTE standard.

BRIEF DESCRIPTION OF THE DRAWINGS

The foregoing and other objects, features, and advantages of the technology disclosed herein will be apparent from the following more particular description of preferred embodiments as illustrated in the accompanying schematic drawings in which reference characters refer to the same parts throughout the various views. The drawings are not necessarily to scale, emphasis instead being placed upon illustrating the principles of the technology disclosed herein.

Figure 1 is conceptual example view of a heterogeneous network.
Figure 2 is a schematic block diagram depicting an example of a cellular radio system and wireless terminals, in relation to which embodiments herein are explained.
Figure 3 is a diagrammatic view of an LTE radio communications system.
Figure 4 shows a signaling diagram schematically illustrating an example of embodiments herein.
Figure 5 is a diagrammatic view of an LTE downlink subframe.
Figure 6 is a diagrammatic view of an LTE uplink subframe showing a sounding reference signal (SRS).
Figure 7 is a flowchart diagram illustrating non-limiting example procedures performed by a network node.
Figure 8 is a flowchart diagram illustrating non-limiting example procedures performed by a UE.
Figure 9 shows a non-limiting example message format for communicating an SRS power headroom report (PHR) from a UE.
Figures 10a and 10b show non-limiting examples of message formats for multiple SRS PHRs.
Figure 11 is a diagram illustrating an example situation in an LTE embodiment.
Figure 12 is a non-limiting function block diagram of a UE communicating with two network nodes.
Figure 13 is a non-limiting function block diagram of a UE communicating with two network nodes showing further details of each network node.
Figure 14 is a flow chart illustrating a method, performed by a wireless terminal, according to embodiments herein.
Figure 15 is a schematic block diagram illustrating a wireless terminal according to embodiments herein.
Figure 16 is a flow chart illustrating a method, performed by a network node, according to embodiments herein.
Figure 17 is a schematic block diagram illustrating a network node according to embodiments herein.
Figures 18a-c are schematic drawings for illustrating embodiments related to computer program embodiments.

DETAILED DESCRIPTION

Before presenting embodiments herein, and as part of the development towards embodiments herein, the situation and problem indicated in the Background will be further discussed.

Currently in the LTE standard, the UL is assumed to be associated to the network node from which the DL signal to the UE is transmitted. This association is based on UE measuring path loss on the received DL signal and does not take the path loss actually on the UL into consideration. The UL transmission of the Physical Uplink Shared Channel (PUSCH) may be power controlled by the base station sending to the UE Transmit Power Control (TPC) commands via the Physical Downlink Control Channel (PDCCH). These commands regulate the UE's transmit power in reference to the UE's present transmit power setting, i.e., they are relative.

In order to assess the actual power transmitted from the UE, a Power Headroom Report (PHR) may be transmitted from the UE to the base station to inform the base station how much more power the UE has left before it reaches its maximum output power. PHR is needed at the network (NW) side of the radio interface between the base station and UE because the actual UE transmit power cannot be estimated at the NW side which undermines the accuracy of UL power control (PC). In addition, the NW does not know whether the UE has failed to receive one or more power control commands. Considering that power control commands are typically cumulative, accumulated TPC command errors could be corrected by the NW if the UE sent a PHR to the NW.

It would be beneficial to assess the UL quality with respect to a potential reception point/network node, e.g. base station, that is not necessarily associated with power control of PUSCH, especially in the context of heterogeneous networks where the UE may be within transmission distance to several base stations. One example application is handling of handover decisions for the UL in situations where the UL and DL are decoupled. Another application is in CoMP scenarios where it would be beneficial to assess channel quality for potential UL links in order to evaluate new sets of reception points in the CoMP set without having to actually redirect the PUSCH transmission.

In the LTE standard, the UE has the ability to transmit known Sounding Reference Signals (SRS) on the UL which are known by both the UE and a base station. The SRS are used by the base station to estimate the UL channel quality for a given UE, and the estimates are used by the base station scheduler to place subsequent UL transmissions on the optimal part of the available frequency band. In the context of UL/DL decoupling, the SRS may also be used to select to which node(s) to associate the UL transmission. However, a problem is that although the SRS transmitted by the UE can be received at arbitrary nodes or RBSs within reach of the transmission, the power of the PUSCH would also need to be measured at the same node to determine the actual transmission power of the UE because the SRS power is signaled from the RBS as a ratio or quotient between the SRS and PUSCH power levels. It is inconvenient and computationally costly to measure the PUSCH power at all base stations/CoMP points that can receive the UE's SRS. In addition, it requires providing the scheduling information about where in the frequency band the PUSCH is transmitted at all those base stations. This link between the PUSCH and the SRS powers makes probing for new potential UL reception base stations/CoMP points cumbersome, particularly when the UL and DL are decoupled (i.e., potentially distributed over; or set up to, different nodes) and/or UL CoMP is used.

Another affected situation is where nodes other than the reception points for PUSCH estimate the induced (PUSCH) interference from a UE. To determine a good estimate of the induced interference from PUSCH, the received power of the SRS needs to be sufficiently large.

In view of the above it may be concluded that is desirable to assess UL quality with respect to a potential reception point of a network node that is not necessarily associated with power control of PUSCH, e.g. a network node being a base station not serving the UE, at least not in the downlink. It may also be concluded that it is desirable with closed-loop power control of the SRS, or uplink reference signal transmissions in general, independently of the PUSCH power or other channel power.

This would e.g. facilitate separate evaluation of UL and DL quality and power control thereof, and thereby facilitate UL and DL decoupling.

**Figure 2** is a schematic block diagram depicting an example of parts of a **RAN 202** comprised in a **cellular radio system 201,** such as an LTE based system. In case of LTE the RAN 202 corresponds to an E-UTRAN. The RAN 202 comprises **a first network node 212** and **a second network node 214.** The cellular radio system 201 typically also comprises a core network (not shown) as mentioned in the foregoing, which in the case of LTE is referred to as an Evolved Packet Core (EPC). The first network node 212 and the second network node 214 communicate wirelessly with wireless terminals, e.g. **a first wireless terminal 210** and/or **a second wireless terminal 211,** as shown in the figure. As also already mentioned, wireless terminal may herein be also be referred to as UE. The first network node 212 and the second network node 214 may correspond to base stations in the RAN 202. However, note that they need not correspond to serving base stations of the wireless terminal, at least not base stations serving the wireless terminal in the downlink. In fact, at least the first network node 212 should preferably be separate from a base station serving the first wireless terminal 210 in the downlink, since, as indicated above, there are already existing solutions when the uplink reference signal is transmitted to a base station serving the first wireless terminal 210 in the downlink.

In some embodiments, e.g. in case of decoupled uplink and downlink, the first network node 212 may be an uplink serving base station for the first wireless terminal 210 and the second network node 214 may be a downlink serving base station for the first wireless terminal 210, or a non-serving base station that does not serve the first wireless terminal 210.

The first network node 212 and the second network node 214 may comprise Tx point(s) and/or Rx point(s), corresponding to antenna sites for transmitting and/or receiving radio signals for communication with the wireless terminals. Any Tx point(s) and/or receive Rx point(s) of respective network node 212, 214 need not be physically co-located and need not be physically co-located with other parts of the respective network node 212, 214, i.e. the first network node 212 and/or the second network node 214 may comprise distributed parts. In view of Figure 1, any of the first network node 212 and the second network node 214 may correspond to any network node comprising the antennas providing radio coverage for the cells shown in Figure 1. The first network node 212 and the second network node 214 will be further discussed below.

Attention is drawn to that Figure 2 is only schematic and for exemplifying purpose. The cellular radio system 201 may, and typically will, in reality comprise several further network nodes, base stations, cells etc., as realized by the skilled person, but which are not shown herein for simplicity.

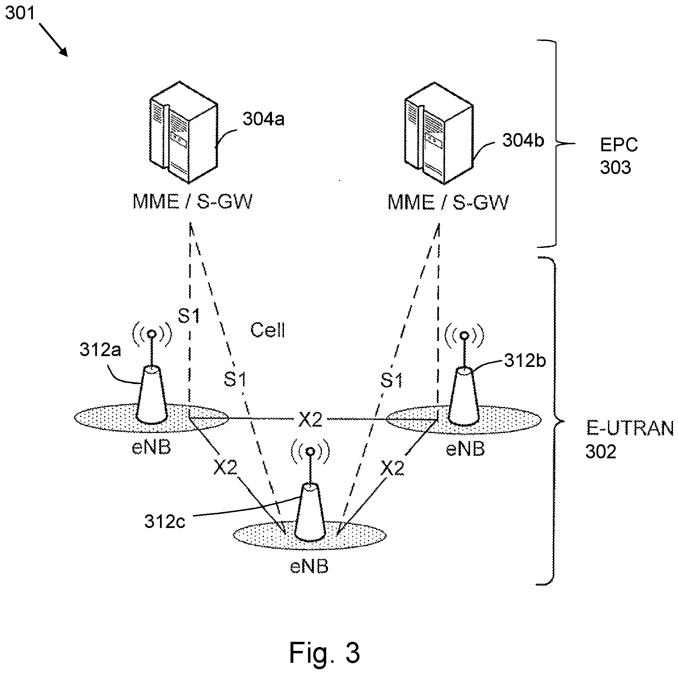

**Figure 3** schematically shows an example of a cellular radio system being **an LTE system 301,** i.e. with 3GPP radio access technology where network nodes are **base stations (eNodeBs) 312a-c of a E-UTRAN 302** and connected to **an EPC 303** i..e. a core network, via **Access Gateways (AGWs) 304a-b.** The AGWs 304a-b are in the shown LTE example one or more Mobility Management Entities (MMEs)/Serving GateWays (S-GWs) of the EPC 303. The base stations 312a-c communicate with each other via a so called X2 interface and with the AGWs via a so called S1 interface. In case of e.g. a GSM system instead of the LTE system 301, the base stations 312a-c would instead be connected to RNC nodes. In general, in LTE the functions of a RNC node are distributed between base stations (eNodeBs) and AGWs.

As such, the RAN of an LTE system has an essentially "flat" architecture comprising base stations without reporting to RNC. The EPC 303 may correspond to the core network (not shown) mentioned above in connection with Figure 2. The first network node 212 and/or the second network node 214 of Figure 2 may correspond to a respective one of the base stations 312a-c. The following example embodiments are described in the context of an LTE system for illustration purposes only.

Attention is drawn to that also Figure 3 is only schematic and for exemplifying purpose. The LTE system 301 may, and typically will, in reality comprise several further network nodes etc. of the E-UTRAN 302 and EPC 303, as realized by the skilled person, but which are not shown herein for simplicity.

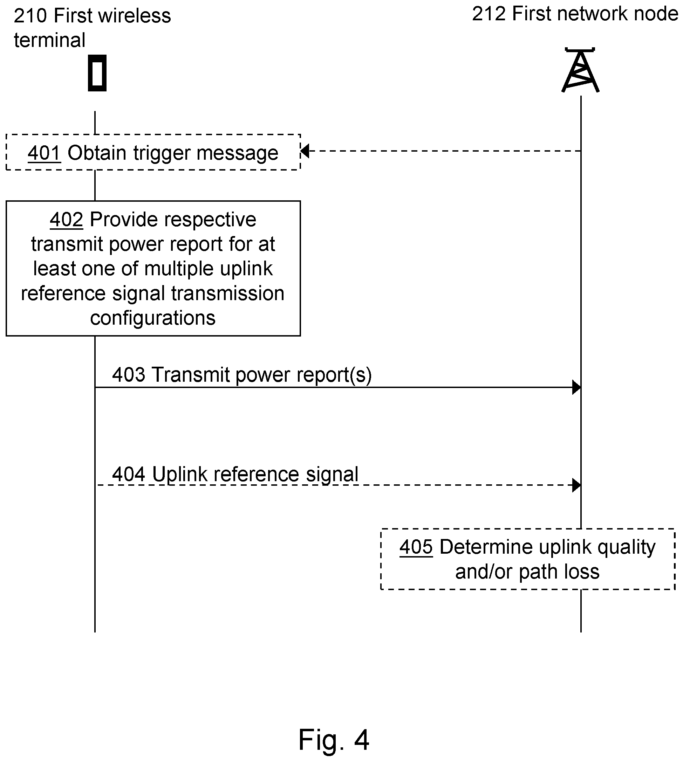

Examples of embodiments herein relating to a method in the first wireless terminal 210, for handling uplink transmit power reporting in the RAN 202 of the cellular radio system 201, will now be described with reference to the combined signaling diagram and flowchart depicted in **Figure 4.**

The method comprises the following actions, which actions may be taken in any suitable order. Further, actions may be combined.

**Action 401**

The first wireless terminal 210 may obtain a trigger triggering provision of a respective transmit power report, see Action 402 below. Obtaining of the trigger may comprise receiving it from the first network node 212 or that the first wireless terminal 210 detects one or more conditions as the trigger. The conditions will be separately exemplified and further discussed below.

**Action 402**

The first wireless terminal 210 provides a respective transmit power report, e.g. PHR, for at least one of multiple uplink reference signal transmission configurations comprised in the first wireless terminal 210. Each configuration configures transmission, by the first wireless terminal 210, of an uplink reference signal, e.g. SRS. The respective transmit power report provides information about transmit power used by the first wireless terminal 210 for transmitting the uplink reference signal, e.g. information regarding remaining available transmit power used by the wireless terminal for transmitting the uplink reference signal. A PHR typically provides information about the transmit power by reporting remaining transmit power, i.e. difference between available power for transmitting the uplink reference signal and used power for transmitting the uplink reference signal. Note that, as mentioned above, in LTE the PHR is conventionally provided for PUSCH and not specifically for an uplink reference signal such as SRS.

How the respective transmit power reports may be provided will be separately described and exemplified below.

Also note that in the context of the present disclosure, process may be used synonymously with configuration, e.g. SRS process, is used synonymously with SRS configuration. The uplink reference signal configurations, in particular in the form of SRS processes, will be described in further detail below.

There may e.g. be a separate transmit power report, e.g. PHR, provided specifically for each configuration, e.g. SRS process. The first wireless terminal 210 may thus comprise multiple report-configuration sets, where each report provides information about transmit power for an actual uplink reference signal only when or if the corresponding configuration is used for uplink reference signal transmission.

Said at least one of the multiple uplink reference signal transmission configurations may be associated with a respective path loss measurement by the first wireless terminal 210, which respective path loss measurement is based on a respective specific downlink reference radio resource, e.g. a downlink reference signal or downlink reference radio resource upon which a downlink reference signal is transmitted by the network node. Examples of downlink reference radio resource is e.g. Channel State Information Reference Signal (CSI-RS) and Common Reference Signal (CRS) of a certain cell. The respective specific downlink reference radio resource may e.g. be transmitted from the first network node 212 or second network node 214, or a Tx point thereof. Note that, since the respective specific downlink reference radio resource is transmitted by the network, e.g. a Tx point associated with the first network node 212, there is in this case also an association between said at least one uplink reference signal transmission configuration and the first network node 212 (e.g. more specifically the Tx point thereof).

The transmit power of the uplink reference signal according to said at least one uplink reference signal transmission configuration may be based on said respective path loss measurement.

One reason for involving downlink path loss measurement is so called open loop power control of the UE and downlink path loss measurement is a factor for determining what power to suitable use when transmitting in the uplink. An uplink reference signal transmission configuration associated with a path loss measurement in the downlink e.g. enables dynamic and/or automatic adaptation of the uplink reference signal transmission (according to a configuration as described above) to changes in the path loss. Changes in the path loss is typically owing to changes in the environment and/or location of the first wireless terminal 210. For example, if the first wireless terminal 210 moves so that path loss is worsened, i e increases, in the downlink from the first network node 212, the association of an uplink reference signal transmission configuration with the path loss enables the uplink reference signal to be transmitted at higher power to compensate for the worsening in path loss. The first network node 212 (or Tx point thereof) that was transmitting the specific downlink reference radio resource for the path loss measurement should in this example also be recipient of the uplink reference signal.

The path loss measurement in the downlink will be further described and exemplified below.

The respective transmit power report may comprise a respective identifier identifying said at least one reference signal transmission configuration. This enables the first network node 212 to connect a received transmit power report with a certain uplink reference signal transmission, making embodiments herein more flexible and versatile. For example extending applicability also to situations when there would otherwise be difficult or not possible for the first network node 212 to identify the uplink reference signal that a received transmit power report is for or concerns. This may e.g. be the case if sending of the transmit power report has not been triggered by the first network node 212.

### Action 403

The first wireless terminal 210 sends the respective transmit power report to one or more network nodes. In the shown example the first network node 212 is recipient. As should be realized the transmit power reports may be sent via a base station serving the first wireless terminal 210 in the uplink but this base station may, but need not necessarily, be an intended recipient and user of one or more of the transmit power reports and may, but need not necessarily, as already mentioned above, correspond to the first network node 212. Although the respective transmit power report is separate it may be sent grouped with other transmit power reports.

When the first wireless terminal 210 has obtained the trigger in Action 401, the respective transmit power report may, in response to the obtained trigger, be provided for said at least one uplink reference signal transmission configuration and then sent according the present action.

### Action 404

The first wireless terminal 210 may transmit, for receipt by the one or more network nodes, the uplink reference signal according to said at least one uplink reference signal transmission configuration. In the shown example the first network node 212 is recipient.

Note that, although the present action is shown as a last action, it may additionally and/or alternatively take place before, between, during and/or after actions 401-403. The uplink reference signal may e.g. be sent continuously or repeatedly (typically periodically) according to said at least one uplink reference signal transmission configuration. This may be done independently of when a transmit power report associated with the configuration is being sent.

### Action 405

The first network node 214 may determine uplink quality and/or path loss associated with the first wireless terminal 210 based on the uplink reference signal transmitted in Action 404 (and received by the first network node 214) and based on the respective transmit power report sent to and received by the first network node 212 in Action 403.

Further, the first wireless terminal 210 may be power controlled by the first network node 212 based on the uplink reference signal transmitted in Action 404 (and received by the first network node 214) and based on the respective transmit power report sent to and received by the first network node 212 in Action 403.

It may be advantageous to, as shown in Figure 4, send the respective transmit power report (Action 403) prior to transmitting the uplink reference signal (Action 404) That is, the report may be provided, sent and be received by a target network node, e.g. the first network node 212, before the actual uplink reference signal transmission that the transmit power report concerns. An advantage here is that the report may already be present and be directly used by the first network nod 212 when it receives the uplink reference signal subject to the report. The first network node 212 is then directly able to e.g. assess uplink quality when receiving the uplink reference signal transmission.

In view of what has been discussed above and in the context of actions 401-405 it should be realized that for example a first transmit power report and uplink reference signal configuration may be targeted to and used for evaluating an uplink to a base station (e.g. the first network node 212), or reception point thereof,. The base station may e.g. be an existing or potentially new uplink serving base station (or reception point thereof) for the first wireless terminal 210. Also, the base station may, based on the first transmit power report and uplink reference signal configuration, perform power control of the wireless terminal.

The evaluation of the uplink and/or power control of the wireless terminal may, in contrast to existing solutions, be made independently of evaluation and/or power control of a downlink, e.g. to a downlink serving base station serving the wireless terminal in the downlink.

Embodiments herein thus facilitate separate evaluation of uplink and downlink quality and separate power control of uplink and downlink, and thereby also support and facilitate uplink and downlink decoupling.

Also as should be realized, embodiments herein may be applied to accomplish additional reports and configurations, e.g. a second transmit power report for a second uplink reference signal configuration etc, for example one report for each one of said multiple configurations. Each such additional report and configuration may be targeted for, and independently used for, other uplinks and/or downlinks to other or the same base stations. When the base station is the same there may be different reception and/or transmission points involved.

Embodiments herein thus support more versatile and/or flexible solutions than currently offered e.g. in the LTE standard.

To further enhance understanding of embodiments herein and detailed examples to follow, some particulars of LTE will be discussed before some more detailed examples follow.

LTE uses Orthogonal Frequency-Division Multiplexing (OFDM) in the downlink and Discrete Fourier Transform (DFT)-spread OFDM in the uplink. A basic LTE downlink physical resource is defined in terms of a time-frequency grid, where each resource element corresponds to one OFDM subcarrier during one OFDM symbol interval. In the time domain, LTE downlink transmissions are organized into radio frames of 10 ms, each radio frame consisting of ten equally-sized subframes of length Tsubframe = 1 ms. The resource allocation in LTE is typically described in terms of resource blocks (RB), where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth. In the frequency domain, LTE downlink uses a 15 kHz sub-carrier spacing. Thus, a Resource Block (RB) corresponds to one slot (0.5 ms) in the time domain and 12 contiguous subcarriers in the frequency domain. A Resource Element (RE) is then defined as one subcarrier in the frequency domain, and the duration of one OFDM symbol in the time domain.

Physical layer channels in the LTE uplink are provided by the Physical Random Access CHannel (PRACH); the Physical Uplink Shared CHannel (PUSCH); and the Physical Uplink Control CHannel (PUCCH). PUCCH transmissions are allocated specific frequency resources at the edges of the uplink bandwidth (e.g. multiples of 180 kHz in LTE depending on the system bandwidth). PUCCH is mainly used by the UE to transmit control information in the uplink, only in sub-frames in which the UE has not been allocated any RBs for PUSCH transmission. The control signaling may include HARQ feedback as a response to a downlink transmission, channel status reports (CSR), scheduling requests, Channel Quality Indicators (CQIs), etc. The PUSCH is mainly used for data transmissions. However, this channel is also used for data-associated control signaling (e.g. transport format indications, Multiple Input Multiple Output (MIMO) parameters, etc). This control information is used to process the uplink data and is therefore transmitted together with that data. Downlink transmissions are dynamically scheduled.

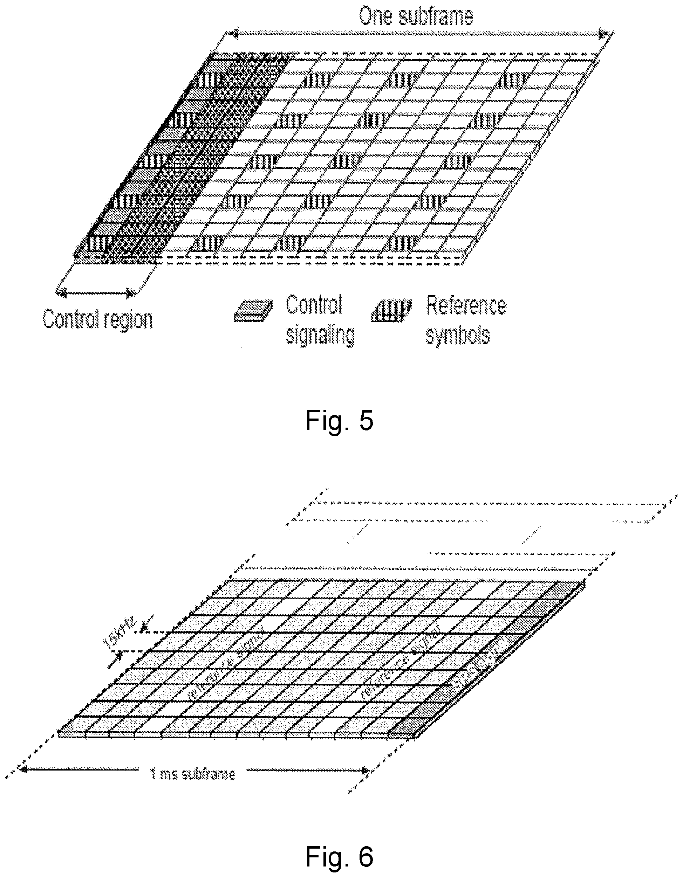

**Figure 5** shows an example downlink subframe. A base station transmits control information as to which UE terminals data is transmitted and upon which resource blocks the data is transmitted in the current downlink subframe. This control signaling is typically transmitted in the first 1, 2, 3 or 4 OFDM symbols in each subframe, and the number n=1,2,3 or 4 is known as the Control Format Indicator (CFI) indicated by the physical CFI channel (PCFICH) transmitted in the first symbol of the control region. The control region also contains physical downlink control channels (PDCCH) and possibly also physical HARQ indication channels (PHICH) carrying ACK/NACK for the uplink transmission. The downlink subframe also contains common reference symbols (CRS), which are known to the receiver and used for coherent demodulation of e.g. the control information.

**Figure 6** shows an example uplink transmission subframe. In terms of the uplink (UL), sounding reference signals (SRS) are known signals that are transmitted by UEs so that the eNodeB can estimate different uplink-channel properties. As explained above, for ease of description and not for limitation, SRS transmissions are used as example reference signals. The technology, however, applies to any type of reference signal that is known by the UE and the network node prior to the UE transmitting that reference signal to the network node.

The SRS have time duration of a single OFDM symbol and are used to produce channel estimates. These channel estimates may be used for uplink scheduling and link adaptation but also for downlink multiple antenna transmission, especially in case of Time Division Duplex (TDD) where the uplink and downlink use the same frequencies. The SRS are defined in 3GPP TS 36.211 "Evolved Universal Terrestrial Radio Access (E-UTRA); Physical channels and modulation," see e.g. v11.0.0, section 5.5.3.

The configuration of SRS symbols, such as SRS bandwidth, SRS frequency-domain position, SRS hopping pattern, and SRS subframe configuration are set semi-statically as a part of RRC information element, as explained in e.g. 3GPP TS 36.331 "Evolved Universal Terrestrial Radio Access (E-UTRA); Radio Resource Control (RRC); Protocol specification", see e.g. v11.1.0, section 6.3.2. Therein, it is explained that the information element (IE) SoundingRS-UL-Config, is used to specify the uplink Sounding RS configuration for periodic and aperiodic sounding.

In LTE, there are two types of sounding reference signals (SRS) transmission in LTE UL: periodic and aperiodic. Periodic SRS is transmitted at regular time instances as configured by means of RRC signaling. Aperiodic SRS is one-shot transmission that is triggered by signaling in the Physical Downlink Control Channel (PDCCH). There are also two different configurations related to SRS: Cell-specific SRS configuration and UE-specific configuration. The cell-specific configuration in essence indicates what subframes may be used for SRS transmissions within the cell. The UE-specific configuration indicates to the terminal (e.g., UE) a pattern of subframes (among the subframes reserved for SRS transmission within the cell) and frequency-domain resources to be used for SRS transmission of that specific UE. It also includes other parameters that the UE shall use when transmitting the signal, such as frequency-domain comb and cyclic shift.

This means that sounding reference signals from different UEs can be multiplexed in the time domain, by using UE-specific configurations such that the SRS of the two UEs are transmitted in different subframes. Furthermore, within the same symbol, sounding reference signals can be multiplexed in the frequency domain. The set of subcarriers is divided into two sets of subcarriers, or combs, with the even and odd subcarriers, respectively, in each such set. Additionally, UEs may have different bandwidths to get additional Frequency-Domain Multiplexing (FDM). (The comb enables frequency-domain multiplexing of signals with different bandwidths and also overlapping). Additionally, code-division multiplexing can be used. Then different users can use exactly the same time- and frequency-domain resources by using different shifts of a basic base sequence.

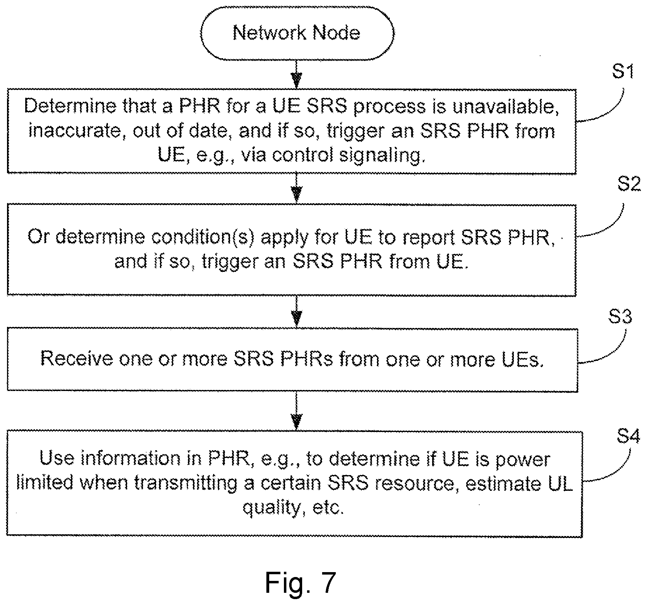

**Figure 7** is a flowchart diagram illustrating non-limiting example procedures performed by a network node, e.g. the first network node 212. In a non-limiting example embodiment, the network node optionally determines whether a PHR for a SRS process of an UE, e.g. the first wireless terminal 210, is unavailable, inaccurate, or out-of-date to send an SRS PHR trigger message to the UE (step S1). Alternatively, one or more conditions may simply be detected by the UE or the network node as a trigger (step S2). In response to the trigger, the network node receives one or more SRS PHRs from one or more UEs (step S3) and uses the SRS PHR (step S4). For example, the network node may use the SRS PHR to determine if the UE is power limited when transmitting a certain SRS. As another example, the network node may also use received SRS PHR(s) from a UE to determine uplink channel quality and/or path loss associated with the UE, e.g., by combining estimated UE SRS transmit power based on the PHR with an estimate of received power for the SRS signal received at the network node.

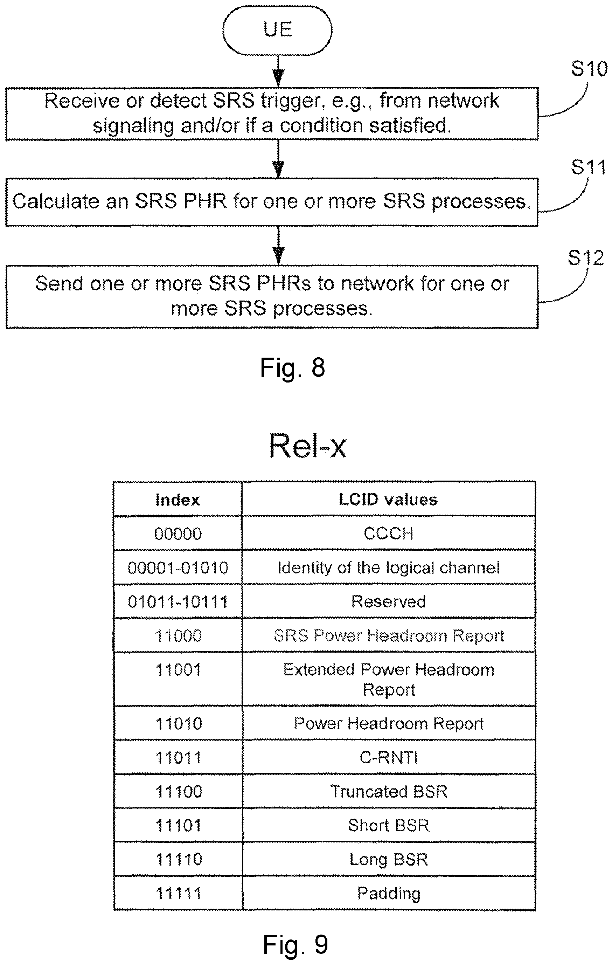

**Figure 8** is a flowchart diagram illustrating non-limiting example procedures performed by a UE, e.g. the first wireless terminal 210. The UE may optionally receive (step S10) an SRS PHR trigger message from a network node, e.g. the first network node 212. Alternatively, the UE may simply detect one or more conditions as an SRS PHR trigger (step S10). In response to the trigger, the UE calculates an SRS PHR for one or more SRS processes (step S11) and then transmits one or more SRS PHRs to one or more network nodes for each of one or more SRS processes at the UE (step S12).

A PHR for an SRS process may include one or more parameters. One example parameter includes a specific SRS transmission power fraction of the maximum UE transmission power including other carrier's transmissions or excluding adjustments for different maximum power adjustments, i.e., maximum power-reduction factors (MPR), power back-offs or/and the UE's configured maximum transmission power. Non-limiting examples of other maximum power-reduction factors include: Additional-MPR (A-MPR) and Power Management-MPR (P-MPR). As another example, the SRS transmission being reported may be a reference SRS transmission with a preconfigured set of values but which the UE has not transmitted. A PHR for such SRS transmission may be referred to as a virtual PHR for an SRS transmission. Alternatively, the SRS transmission may be an actual SRS transmission that the UE has, or will, transmit at a certain time instance.

The reported PHR from a UE to a network node for a specific SRS process may include an identifier that indicates which specific SRS process(es) are included in the PHR report. The identifier may correspond to the identifier mentioned above in connection with Figure 4. The identifier may be defined based on one or more of the following examples: the carrier or subframe the SRS PHR is reported on or in, a flag in a Media Access Control (MAC) Packet Data Unit (PDU) when the SRS process(es) PHR(s) is reported, the order SRS processes are placed in the MAC PDU, etc.

**Figure 9** shows a non-limiting example message format for communicating an SRS PHR from a UE. The message format includes a MAC layer packet header in accordance with 3GPP TS 36.321, v11.0.0, section 6.1.3.6, with a field identified by index 11000 with a logical channel identifier (LCID) value of "SRS Power Headroom Report." The LCID defines the type of MAC service data unit (SDU), e.g., SRS PHR. The MAC header also includes a Length (L) field determining the length of the MAC SDU. The L field is included for variable-sized MAC SDUs except for the last MAC SDU. An alternative LCID index may be a value from the Rel-11 reserved ones 01011-11000. Thus, SRS Power Headroom Report may be assigned 10000, and 01011-01111 and 10000-11000 may be reserved or assigned to other MAC control elements. The LCID may be different from that shown in Figure 9.

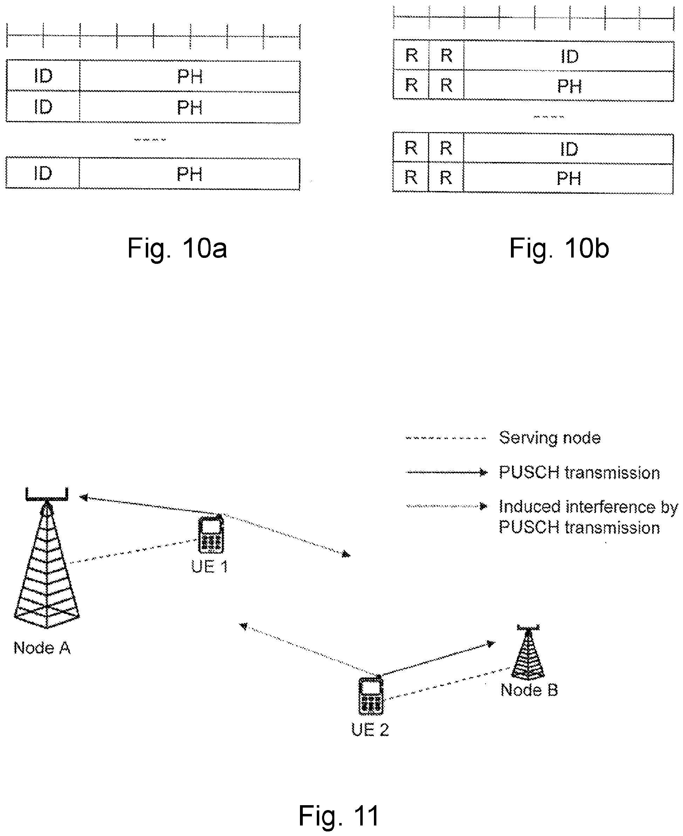

**Figures 10A and 10B** show non-limiting examples of message formats for multiple SRS PHRs. The examples include the possibility that a report only reports for a single SRS process. The identifier (ID) is an SRS power control process identifier used in an SRS configuration and may use two reserved bits in section 6.1.1.3 of 3GPP TS 36.321, v11.0.0. Respective Power Headrooms (PHs) being reported by the PHRs are indicated in the figure. Figure 10B shows another alternative format for multiple SRS PHRs where the ID is an SRS power control process identifier used in the UE configuration and R is a reserved bit or bits. Other example formats include reporting SRS PHR from multiple cells in line with Extended Power Headroom MAC Control Element specified in Section 6.1.3.6 of TS 36.321 Rel-11, v11.0.0 and aggregating PUSCH and SRS PHR in same MAC control element. The MAC sub-header for SRS PHR given as examples 10A and 10B would include L field since the sizes are variable. In other formatting examples where the size is fixed the L field would not be present. In case of multiple reports, the ID may be omitted, and in such a case, the ID is implicit with respect to the order of the PH, e.g., first PH corresponds to SRS process with lowest ID, second PH to second lowest ID, etc.

The formula below is one example of how an SRS PHR may be determined by a UE, e.g. the wireless terminal 210. However, other definitions of an SRS PHR are possible. In this example, the SRS PHR is reported by a UE for a single SRS process for a single carrier assuming no other transmission.

$$PHR = P_{CMAX,c} - P_{SRS\_OFFSET,c}(m) - 10\log_{10}(M_{SRS,c}) - P_{0\_PUSCH,c}(j) - \alpha_c(j) \cdot PL' - f_{SRS,c}(i)$$

$P_{CMAX,c}$ is the configured UE transmit power in a subframe i for serving cell c.

$P_{SRS\_OFFSET,c}(m)$ is semi-statically configured by higher layers for m=0 and m=1 for serving cell c. For SRS transmission given trigger type 0, then m=0, and for SRS transmission given trigger type 1, then m=1. Trigger type 0 SRS indicates periodic SRS transmission that does not require individual triggering of transmission of each SRS symbol, while trigger type 1 SRS indicates aperiodic SRS, i.e., SRS that are transmitted as a single instance following a trigger command.

$M_{SRS,c}$ is the bandwidth of the SRS transmission in subframe i for serving cell c expressed in number of resource blocks.

$P_{O\_PUSCH,c}(j)$ and $\alpha_c(j)$ are parameters defined by higher layer signaling.

$PL'$ is a path loss estimate performed by the UE based on configured downlink reference signals and a reference transmit power. One option is to employ cell specific reference signals associated to the serving cells for the purpose of estimating $PL'$. Another option is to exploit configurable reference signals, e.g., CSI-RS, transmitted from an arbitrary transmission point that does not necessarily coincide with the serving cell.

$f_{SRS,c}(i)$ is determined per SRS process or groups of SRS processes.

If the total transmit power of the UE for the Sounding Reference Symbol or SRS would exceed $\hat{P}_{CMAX}(i)$, the UE may scale the SRS transmitted power $\hat{P}_{SRS,c}(i)$ for the serving cell c in subframe i such that the condition:

$$\sum_c w(i) \cdot \hat{P}_{SRS,c}(i) \le \hat{P}_{CMAX}(i)$$

is satisfied, where $\hat{P}_{SRS,c}(i)$ is the linear value of $P_{SRS,c}(i)$, where $\hat{P}_{CMAX}(i)$ is the linear value of the maximum transmit power $P_{CMAX}$ in subframe i, and where w(i) is a scaling factor of of serving cell c and $0 < w(i) \le 1$. The w(i) values are the same across serving cells.

A SRS PHR transmission, or more generally a transmit power report for an uplink reference signal transmission configuration, may be initiated by one or more of the following example reporting methods:

(1) An eNB, e.g. the first network node 212, requests a UE, e.g. the wireless terminal 210, to report PHR for one or several SRS processes. The request may e.g. be in the form of a trigger message sent by the first network node 212 to the first wireless terminal 210. This may be considered an example of how the first network node 212 may send a trigger message to the wireless terminal 210, as discussed above in connection with Figure 4 and action 401.

(2) The UE, e.g. the first wireless terminal 210, periodically reports PHRs for one or several SRS processes to the eNB based on a preconfigured periodicity. This may be considered an example of how the first wireless terminal 210 may detect a condition as the trigger for providing the respective transmit power report, as discussed above in connection with Figure 4 and action 401. The reporting periodicity of the SRS processes' PHRs may be shared with other PHRs, for example, PHR type 1 or PHR type 2 for PUSCH and PUCCH. Type 1 reporting reflects the power headroom assuming PUSCH-only transmission on the carrier, while the Type-2 report assumes combined PUSCH and PUCCH transmission.

(3) The UE, e.g. the first wireless terminal 210, reports the SRS process PHR for one or several SRS processes when the reference symbols used to estimate pathloss on the downlink have changed. This may be considered a further example of how the first wireless terminal 210 may detect a condition as the trigger for providing the respective transmit power report, as discussed above in connection with Figure 4 and action 401. The UE may, in addition to reporting the PHR for one or several SRS processes, also report PHR report type 1 and type 2 at the same reporting occasion.

(4) The UE, e.g. the first wireless terminal 210, reports the SRS process PHR for one or several SRS processes when the measured pathloss for one of the SRS processes has changed above or below a certain threshold. This may be considered a yet further example of how the first wireless terminal 210 may detect a condition as the trigger for providing the respective transmit power report, as discussed above in connection with Figure 4 and action 401. The threshold may be either an absolute or relative number or value. The UE may, in addition to reporting the PHR for one or several SRS processes, also report PHR report type 1 and type 2 at the same reporting occasion.

(5) The UE, e.g. the first wireless terminal 210, reports the SRS process PHR for one or several SRS processes when the configuration of the SRS itself has changed or the configuration of any other related channels that can report PHR has changed. This may be considered an even yet further example of how the first wireless terminal 210 may detect a condition as the trigger for providing the respective transmit power report, as discussed above in connection with Figure 4 and action 401. The UE may, in addition to reporting the PHR for one or several SRS processes, also report PHR report type 1 and type 2 at the same reporting occasion.

Non-limiting examples of changes to the SRS process or PHR reporting mechanism include: the pathloss from the downlink reference resource changes compared to a threshold, the set of SRS processes that share the accumulated TPC command changes, and/or the reporting periodicity of PHR changes for one or several SRS processes.

As a further example, a transmit power control (TPC) accumulation function for PHRs and for power controlling of the SRS transmission may be independently configured per SRS process or may be configured to be shared between certain SRS processes. SRS TPC commands may be sent independently to a specific SRS process or processes, and hence, not affect the closed-loop power control for PUSCH or PUCCH. In such an example case, the SRS transmitted power may look as follows:

$$P_{SRS,c}(i) = \min\left\{P_{CMAX,c}, P_{SRS\_OFFSET,c}(m) + 10\log_{10}(M_{SRS,c}) + P_{0\_PUSCH,c}(j) + \alpha_c(j) \cdot PL' + f_{SRS,c}(i)\right\}$$

, where the parameters are the same as for the above example PHR formula for an SRS process, with the difference that they are given for specific carrier c. In another example, a path loss component of the SRS power control formula is configured at a higher protocol layer towards specified reference signals. The UE, e.g. the first wireless terminal 210, may be configured by the eNB e.g. the first network node 212, to measure the path loss on a specific reference radio resource such as: a specific channel state information-reference signals (CSI-RS), sets of CSI-RS, or a common reference signal (CRS) of a certain cell. This enables the network to configure the UE to control its SRS transmit power towards the network node that transmits a specific downlink reference resource while maintaining a connection to another network node as well. Hence, the SRS transmitted power may then be extended as:

$$P_{SRS,c}(i) = \min\left\{P_{CMAX,c}, P_{SRS\_OFFSET,c}(m) + 10\log_{10}(M_{SRS,c}) + P_{0\_PUSCH,c}(j) + \alpha_c(j) \cdot PL_k + f_{SRS,c}(i)\right\}$$

where $PL_k$ is the pathloss for the specific configured reference radio resource used by the UE for the SRS transmission.

In multi-point coordination scenarios with cooperating nodes, it may be desirable to determine the interference induced by the served UEs in the cooperating cluster. Information about interference may be used for interference suppression methods and/or better scheduling and link adaptation decisions. **Figure 11** shows an example scenario for such situation. Wireless terminals UE1 and UE2 are shown communicating with a network node Node A and a network node Node B. Wireless terminal UE1 may e.g. correspond to any one of the first wireless terminal 210 and the second wireless terminal 211 and the wireless terminal UE to the other one of the first wireless terminal 210 and the second wireless terminal 211. Similarly network node Node A may correspond to the first network node 212 and the network node Node B may correspond to the second network node 214. In the shown example UE1 is served by Node A and the UE2 by Node B. When UEs transmit over the PUSCH to their respective serving nodes, they also cause interference at non-serving nodes, e.g. UE1 cause interference at Node B. Accurate knowledge of the induced interference may be obtained by estimating the channel between the UE and the non-serving node, e.g. between UE1 and Node B, using the SRS sent by the UE, in the example UE1. Especially in the case of UL MIMO, the channel knowledge may be used by one or multiple distributed schedulers to coordinate the pre-coder choice for the PUSCH transmissions. It is realized that embodiments herein may be used for and facilitate gaining such knowledge.

To provide accurate channel estimates, the received power of the SRS transmitted by the UE needs to be sufficiently high. Hence, it is desirable to power control the SRS with respect to the path loss to the node with highest path loss among the cooperating, i.e. involved, nodes. This may be accomplished for example by slightly modifying the SRS power control formula from above as follows:

$$P_{SRS,c}(i) = \min\left\{P_{CMAX,c}, P_{SRS\_OFFSET,c}(m) + 10\log_{10}(M_{SRS,c}) + P_{0\_PUSCH,c}(j) + \alpha_c(j) \cdot PL_{\max} + f_{SRS,c}(i)\right\}$$

where $PL_{\max}$ is the maximum pathloss for, e.g., a set of higher-layer configured measurement resources. For example, in the scenario in Figure 11, NodeA may transmit measurement resource configuration A, and NodeB may transmit measurement resource configuration B. The UE is higher-layer configured to control its transmit power with respect to the largest path loss among the measurement resource configurations A and B. A PHR (e.g. in addition to other triggers) may then be triggered when maximum path loss is switched between the measurement resources.

Note that both the first wireless terminal 210 and the second wireless terminal 211, as well as both the wireless terminals UE1 and UE2 may operate according to embodiments herein.

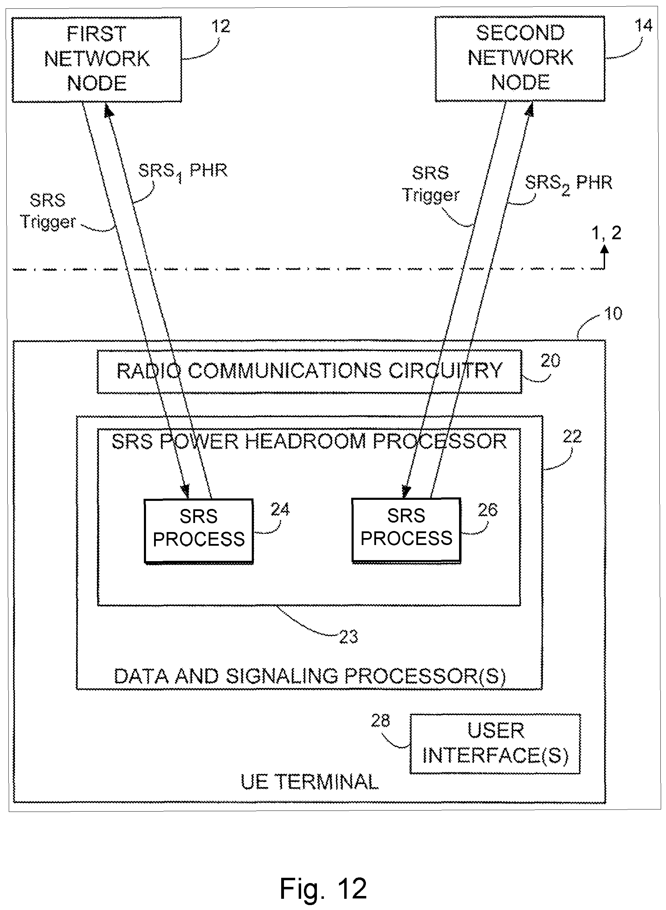

**Figure 12** shows portions of an example telecommunications network, and particularly two network nodes, e.g., a **first network node 12** and **a second network node 14.** The first network node 12 may correspond to the first network node 212 and the second network node 14 may correspond to the second network node 214. The first network node 12 and second network node 14 may or may not be members of a same radio access network. In a Long-Term Evolution (LTE) context, the first network node 12 and the second network node 14 may be base station nodes. In other contexts or other types of radio access networks, the first network node 12 and/or the second network node 14 may be some other type of node. The first network node 12 and the second network node 14 communicate over a radio interface with **a UE 10** that includes **a radio communications circuitry 20, one or more data and signaling processors 22,** and **one or more user interfaces 28.** The UE 10 may correspond to the wireless terminal 210. The data and signaling processors 22 includes **an SRS PHR processor 23** for managing one or more SRS processes. Two **SRS processes 24 and 26** are shown in this example. Each SRS process may receive an SRS trigger from a corresponding network node, and in response, the SRS PHR processor 23 sends an SRS PHR to that triggering node as shown. Alternatively, the SRS PHR processor 23 may detect one or more conditions as an SRS PHR trigger. In response to a trigger, the SRS PHR processor 23 calculates an SRS PHR for each of one or more SRS processes triggered and generates one or more SRS PHRs to be transmitted via the radio communications circuitry 20 to one or more of the network nodes.

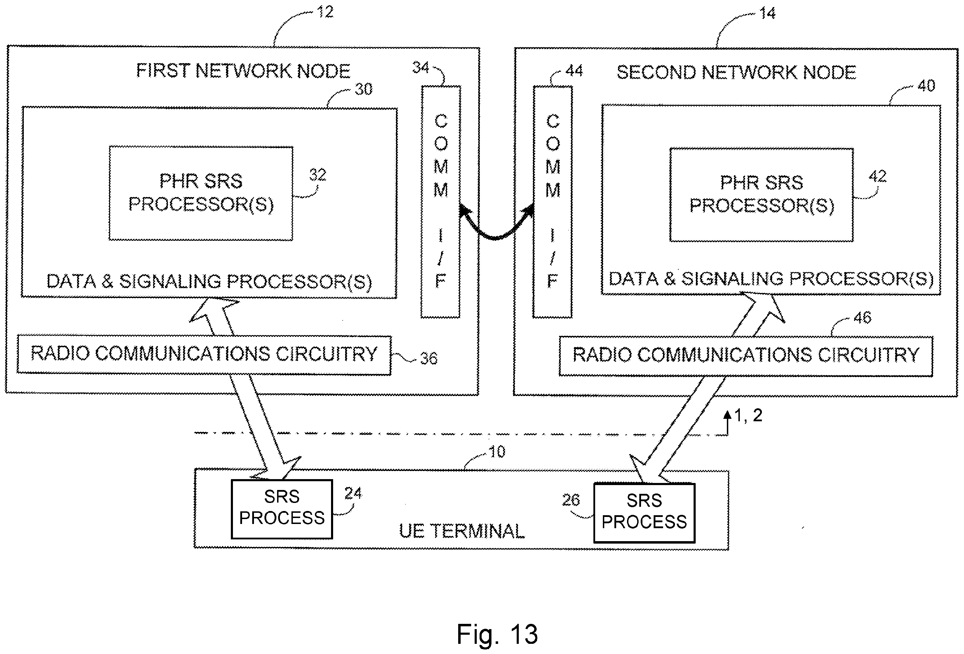

**Figure 13** shows other portions of the example telecommunications network with further example details for the first network node 12 and second network node 14. The first network node 12 and the second network node 14 each communicate over the radio interface with UE 10 using respective **radio communications circuitry 36 and 46** and can communicate with each other as well as with other network nodes via respective **communication interfaces 34 and 44.** Each node includes **one or more respective data and signaling processors 30 and 40** that each includes **one or more SRS PHR processor(s) 32 and 42** for managing one or more SRS processes, and if network node triggers are used, they monitor trigger conditions and generate trigger signals to be sent to appropriate UE(s) via respective radio communications circuitry. For example, the SRS PHR processor(s) 32 and 42 may be programmed to determine whether a PHR for a UE SRS process is unavailable, inaccurate, or out-of-date to send an SRS PHR trigger message to the UE. In response to the trigger, the SRS PHR processor(s) 32 and 42 receive one or more SRS PHRs from one or more UEs and use the SRS PHR to determine if the UE is power limited when transmitting a certain SRS resource. The SRS PHR processor(s) 32 and 42 may also use received SRS PHR(s) to determine uplink channel quality and/or path loss associated with the UE, e.g., by combining estimated UE SRS transmit power based on the PHR with an estimate of received power for the SRS signal received at the network node which is determined by the SRS PHR processor(s) 32 and 42.

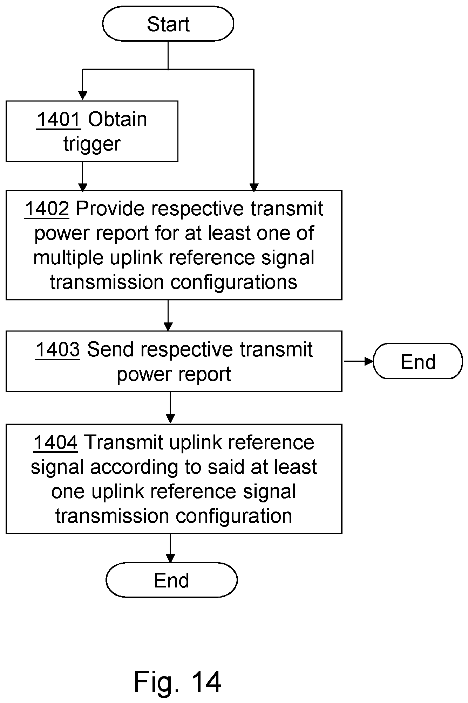

Embodiments herein relating to a method, performed by the first wireless terminal 210, for handling uplink transmit power reporting in the radio access network 202, will now be further elaborated and described with reference to the flowchart depicted in **Figure 14.**

The method comprises the following actions, which actions may be taken in any suitable order. Further, actions may be combined.

**Action 1401**

The first wireless terminal 210 may obtain a trigger triggering the provision of the respective transmit power report according to Action 1402 below. Obtaining the trigger may comprise receiving a trigger message from the first network node 212 or the first wireless terminal 210 may detect one or more conditions as the trigger.

This action may fully or partly correspond to action 401 and S10 discussed above.

**Action 1402**

The first wireless terminal 210 provides a respective transmit power report for at least one of multiple uplink reference signal transmission configurations comprised in the first wireless terminal 210. Each configuration configures transmission, by the first wireless terminal 210, of an uplink reference signal. The respective transmit power report provides information abouta transmit power used by the first wireless terminal 210 for transmitting the uplink reference signal. The respective transmit power report may comprise a respective power headroom report (PHR) and/or the uplink reference signal may comprise a sounding reference signal (SRS).

In some embodiments, said at least one uplink reference signal transmission configuration is associated with a respective path loss measurement by the first wireless terminal 210, which respective path loss measurement is based on a specific downlink reference radio resource. The transmit power of the uplink reference signal according to said at least one uplink reference signal transmission configuration may be based on the respective path loss measurement associated with said at least one uplink reference signal transmission configuration.

Further, in some embodiments, said respective transmit power report comprises a respective identifier identifying said at least one reference signal transmission configuration.

Each of the multiple uplink reference signal transmission configurations may comprise a set of parameters that indicates one or more of the following:

how transmission of the uplink reference signal is triggered,
how transmission of the uplink reference signal has its path loss estimate defined,
whether transmission of the uplink reference signal is unique for a certain frequency carrier,
which time and/or frequency resources should be used for transmission of the uplink reference signal,
what timing alignment if any is needed, and/or
whether the configuration has a corresponding uplink reference signal specific power-control loop.

This action may fully or partly correspond to action 402 and S11 discussed above.

**Action 1403**

The first wireless terminal 210 sends the respective transmit power report to one or more network nodes, e.g. the first network node 212, of the cellular radio system 201.

This action may fully or partly correspond to action 403 and S12 discussed above.

**Action 1404**

The first wireless terminal 210 transmits, for receipt by the one or more network nodes, e.g. the first network node 212, the uplink reference signal according to said at least one uplink reference signal transmission configuration.

This action may fully or partly correspond to action 404 discussed above.

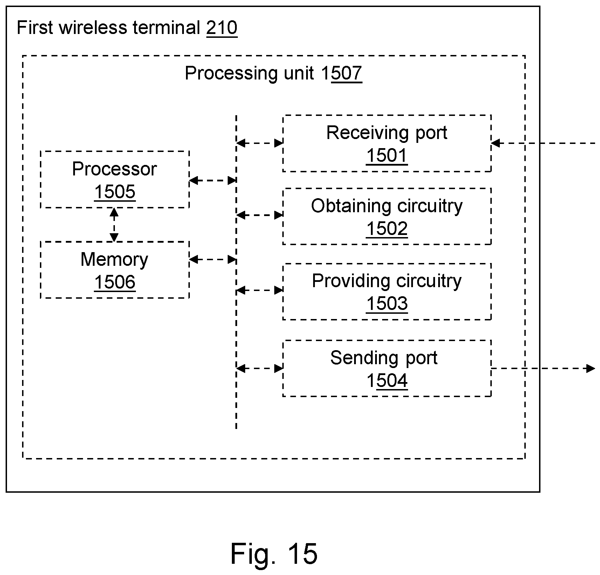

To perform the actions 1401-1404 for handling uplink transmit power reporting in the radio access network 202, the first wireless terminal 210 may comprise an arrangement schematically depicted in **Figure 15.**

The first wireless terminal 210 typically comprise **a receiving port 1501** configured to participate in downlink wireless transmission. The receiving port 1501 may fully or partly correspond to the radio communications circuitry 20 in Figure 12.

In some embodiments, the first wireless terminal 210, or **an obtaining circuitry 1502** comprised in the first wireless terminal 210, is configured to obtain the trigger triggering the provision of the respective transmit power report. Configured to obtain the trigger may comprise the first wireless terminal 210, or the obtaining circuitry 1502, being configured to receive the trigger message from the first network node 212 or the first wireless terminal 210, e.g. the obtaining circuitry 1502, being configured detect said one or more conditions as the trigger. The obtaining circuitry 1502 may fully or partly correspond to the radio communications circuitry 20 and/or data and signalling processor(s) 22 in Figure 12.

The first wireless terminal 210, or **a providing circuitry 1503** comprised in the first wireless terminal 210, is configured to provide the respective transmit power report for said at least one of multiple uplink reference signal transmission configurations comprised in the first wireless terminal 210. The providing circuitry may fully or partly correspond to the data and signalling processor(s) 22 and/or SRS power headroom processor 23 in Figure 12.

Further, the first wireless terminal 210, or **a sending port 1504** comprised in the first wireless terminal 210, may be configured to send the respective transmit power report to said one or more network nodes, e.g. the first network node 212, of the cellular radio system 201. The sending port 1504 may fully or partly correspond to the radio communications circuitry 20 in Figure 12.

In some embodiments, the first wireless terminal 210, e.g. the sending port 1504, is further configured to transmit, for receipt by the one or more network nodes, e.g. the first network node 212, the uplink reference signal according to said at least one uplink reference signal transmission configuration.

In general, the sending port 1504 may be configured to participate in uplink wireless transmission.

The embodiments of the first wireless terminal 210 may be fully or partly implemented through one or more processors, such as **a processor 1505** depicted in Figure 15, together with a computer program for performing the functions and actions of embodiments herein. In some embodiments the circuitry and ports discussed above may be fully or partially implemented by the processor 1505. The processor 1505 may fully or partly correspond to the data and signalling processor(s) 22 in Figure 12.

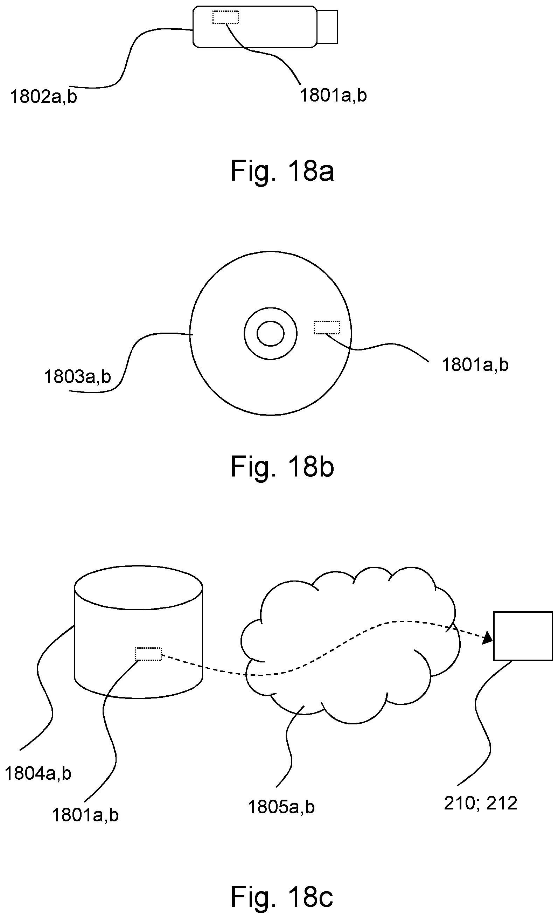

In some embodiments, illustrated with support from the schematic drawings in **Figures 18a-c,** further explained separately below, there is provided **a computer program 1801a** comprising instructions that when executed by a a data processing apparatus, e.g. the processor 1505, causes the first wireless terminal 210 to perform the method according to embodiments herein as described above.

In some embodiments, also illustrated with support from the schematic drawings in Figures 18a-c, there is provided a computer program product, comprising a computer-readable medium on which the computer program 1801a is stored. Examples of the a computer-readable medium is a memory card or **a memory stick 1802a** as in Figure 18a, **a disc storage medium 1803a** such as a CD or DVD as in Figure 18b, **a mass storage device 1804a** as in Figure 18c. The mass storage device 1804a is typically based on hard drive(s) or Solid State Drive(s) (SSD). The mass storage device 1804a may be such that is used for storing data accessible over **a computer network 1805a,** e.g. the Internet or a Local Area Network (LAN).

The computer program 1801a may furthermore be provided as a pure computer program or comprised in a file or files. The file or files may be stored on the computer-readable memory and e.g. available through download e.g. over the computer network 1805a, such as from the mass storage device 1804a via a server. The server may e.g. be a web or file transfer protocol (ftp) server. The file or files may e.g. be executable files for direct or indirect download to and execution on the wireless terminal 210, e.g. on the processor 1505, or may be for intermediate download and compilation involving the same or another processor to make them executable before further download and execution.

The wireless terminal 210 may further comprise a **memory 1506** comprising one or more memory units. The memory 1506 is arranged to store data, such as configurations and/or applications involved in or for performing the functions and actions of embodiments herein.

Those skilled in the art will also appreciate that the ports and circuitry 1501-1505 may refer to a combination of analog and digital circuits, and/or one or more processors configured with software and/or firmware (e.g., stored in memory) that, when executed by the one or more processors such as the processor 1505, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

As a further example, the wireless terminal 210 may comprise **a processing unit 1507,** which may comprise one or more of the circuit(s) and/or port(s) etc mentioned above. As used herein, the term "processing circuit" may relate to a processing unit, a processor, an application specific integrated circuit (ASIC), a field-programmable gate array (FPGA) or the like. As an example, a processor, an ASIC, an FPGA or the like may comprise one or more processor kernels. In some examples, the processing circuit may be embodied by a software and/or hardware module.

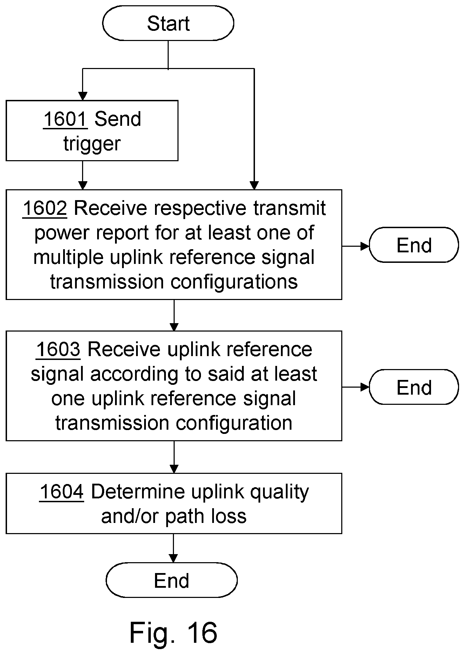

Embodiments herein relating to a method, performed by the first network node 212, for handling uplink transmit power reporting in the radio access network 202, will now be further elaborated and described with reference to the flowchart depicted in **Figure 16.**

The method comprises the following actions, which actions may be taken in any suitable order. Further, actions may be combined.

**Action 1601**

The first network node 212 may send, to the first wireless terminal 210, a trigger for triggering the first wireless terminal 210 to provide the respective transmit power report according to Action 1602 below.

This action may fully or partly correspond to action 401 and/or S1 and/or S2 discussed above.

**Action 1602**

The first network node 212 receives, from the first wireless terminal 210, a respective transmit power report for at least one of multiple uplink reference signal transmission configurations comprised in the first wireless terminal 210. Each configuration configures transmission, by the first wireless terminal 210, of an uplink reference signal. The respective transmit power report provides information about a transmit power used by the first wireless terminal 210 for transmitting the uplink reference signal. The respective transmit power report may comprise a respective power headroom report (PHR), and/or the uplink reference signal may comprise a sounding reference signal (SRS).

Said at least one uplink reference signal transmission configuration may be associated with a respective path loss measurement by the first wireless terminal 210, which respective path loss measurement is based on a specific downlink reference radio resource. The transmit power of the uplink reference signal transmitted according to said at least one uplink reference signal transmission configuration may be based on the path loss measurement associated with said at least one uplink reference signal transmission configuration.

In some embodiments, said respective transmit power report comprises a respective identifier identifying said at least one uplink reference signal transmission configuration.

This action may fully or partly correspond to action 403 and/or S3 discussed above.

**Action 1603**

The first network node 212 may receive, from the first wireless terminal 210, the uplink reference signal according to said at least one uplink reference signal transmission configuration.

This action may fully or partly correspond to action 404 discussed above.

**Action 1604**

The first network node 212 may determine, based on the received uplink reference signal and the received respective transmit power report, uplink quality and/or path loss associated with the first wireless terminal 210.

This action may fully or partly correspond to action 405 and/or S4 discussed above.

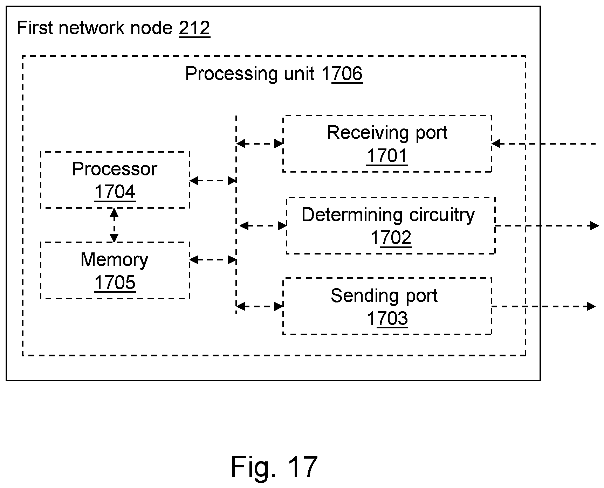

To perform the actions 1601-1603 for handling uplink transmit power reporting in the radio access network 202, the first network node 212 may comprise an arrangement schematically depicted in **Figure 17.**

The first network node 212, or **a receiving port 1701** comprised in first network node 212, is configured to receive, from the first wireless terminal 210, the respective transmit power report for said at least one of multiple uplink reference signal transmission configurations. The first network node 212, e.g. the receiving port 1701, may be further configured to receive, from the first wireless terminal 210, the uplink reference signal according to said at least one uplink reference signal transmission configuration. In general, the receiving port 1701 may be configured to participate in uplink wireless reception. The receiving port 1701 may fully or partly correspond to the radio communications circuitry 36 in Figure 13.

The first network node 212, or a **determining circuitry 1702** comprised in first network node 212, may be configured to determine, based on the received uplink reference signal and the received respective transmit power report, said uplink quality and/or path loss associated with the first wireless terminal 210. The determining circuitry 1702 may fully or party correspond to the data and signaling processors(s) 30 and/or the PHR SRS processor(s) 32 in Figure 13.

The first network node 212, or **a sending port 1703** comprised in first network node 212, may be configured to send, to the first wireless terminal 210, said trigger for triggering the first wireless terminal 210 to provide the respective transmit power report. In general, the sending port 1703 may be configured to participate in downlink wireless transmission. The sending port 1703 may fully or partly correspond to the radio communications circuitry 36 in Figure 13.

The embodiments of the first network node 212 may be fully or partly implemented through one or more processors, such as **a processor 1704** depicted in Figure 17, together with a computer program for performing the functions and actions of embodiments herein. In some embodiments the circuitry and ports discussed above may be fully or partially implemented by the processor 1704. The processor 1704 may fully or partly correspond to the data and signaling processors(s) 30 and/or the PHR SRS processor(s) 32 in Figure 13.

In some embodiments, illustrated with support from the schematic drawings in Figures 18a-c, further explained separately below, there is provided **a computer program 1801b** comprising instructions that when executed by a a data processing apparatus, e.g. the processor 1704, causes the first network node 212 to perform the method according to embodiments herein as described above.

In some embodiments, also illustrated with support from the schematic drawings in Figures 18a-c, there is provided a computer program product, comprising a computer-readable medium on which the computer program 1801b is stored. Examples of the a computer-readable medium is a memory card or **a memory stick 1802b** as in Figure 18a, **a disc storage medium 1803b** such as a CD or DVD as in Figure 18b, **a mass storage device 1804b** as in Figure 18c. The mass storage device 1804b is typically based on hard drive(s) or Solid State Drive(s) (SSD). The mass storage device 1804b may be such that is used for storing data accessible over **a computer network 1805b,** e.g. the Internet or a Local Area Network (LAN).

The computer program 1801b may furthermore be provided as a pure computer program or comprised in a file or files. The file or files may be stored on the computer-readable memory and e.g. available through download e.g. over the computer network 1805b, such as from the mass storage device 1804b via a server. The server may e.g. be a web or ftp server. The file or files may e.g. be executable files for direct or indirect download to and execution on the first network node 212, e.g. on the processor 1704, or may be for intermediate download and compilation involving the same or another processor to make them executable before further download and execution.

The first network node 212 may further comprise a **memory 1705** comprising one or more memory units. The memory 1705 is arranged to store data, such as configurations and/or applications involved in or for performing the functions and actions of embodiments herein.

Those skilled in the art will also appreciate that the ports and circuitry 1701-1703 may refer to a combination of analog and digital circuits, and/or one or more processors configured with software and/or firmware (e.g., stored in memory) that, when executed by the one or more processors such as the processor 1704, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

As a further example, the network node 212 may comprise **a processing unit 1706,** which may comprise one or more of the circuit(s) and/or port(s) etc mentioned above. As used herein, the term "processing circuit" may relate to a processing unit, a processor, an application specific integrated circuit (ASIC), a field-programmable gate array (FPGA) or the like. As an example, a processor, an ASIC, an FPGA or the like may comprise one or more processor kernels. In some examples, the processing circuit may be embodied by a software and/or hardware module.

Figures 18a-c, already mentioned above, are schematic drawings for illustrating embodiments related to computer program embodiments and have been used and discussed above. Note that the same Figures 18a-c have been used to illustrate separate embodiments regarding the first wireless terminal 210 and the first network node 212. The only reason for this is to avoid duplicating the illustrations in Figure 18a-c, and shall thus not be construed as that e.g. computer programs related to the first wireless terminal 210 and first network node 212 are the same and/or need to be stored together on the same computer readable medium. To accentuate that Figures 18a-c in fact show separate embodiments, different numerals have been used for the same element show in Figures 18a-c, e.g. there are two separate computer programs 1801a and 1801b, which may be on respective separate computer readable medium, e.g. the computer program 1801a on memory stick 1802a, and separate from this, the computer program 1801b on another memory stick 1802b.

The technology described above may provide one or more Power Headroom Report(s) (PHR(s)), or other type of transmit power report, specifically for a UE's reference signal transmissions, e.g., SRS transmissions, to each of one or more network nodes. The PHR(s) may then be used for example to provide closed-loop power control specific to that reference signal and preferably independent of the power of other uplink transmissions, e.g., other data channels such as PUSCH transmissions in LTE. For ease of description and not for limitation, PHR(s) are used as example transmit power reports, and SRS transmissions are used as example reference signals. But the technology applies to any type of transmit power report and/or reference signal that is known by the UE and the network node prior to the UE transmitting that reference signal to the network node.

The technology disclosed herein may provide a UE with one or more SRS processes or configurations. Each SRS process or configuration may be associated with one network node that the UE is within communication range of. Example network nodes include macro base stations, low power base stations, CoMP Tx and Rx points, etc. An SRS process or configuration may include a set of parameters that defines that the UE is capable of transmitting SRS, e.g., in a set of one or more subframes, and indicates for example how SRS transmission from the UE is triggered, how the SRS transmission has its path loss estimate defined, whether the SRS transmission is unique for a certain frequency carrier, which time and/or frequency resources should be used for SRS transmission, what timing alignment if any is needed, and/or whether the SRS process has a corresponding SRS-specific power-control loop. Other parameters may be included. A PHR may be sent by the UE for each of one or more SRS processes active at the UE to one or more network nodes.

Further, according to the technology disclosed herein, a UE may optionally receive an SRS PHR trigger message from a network node. Alternatively, the UE may simply detect one or more conditions as an SRS PHR trigger. In response to the trigger, the UE may calculate an SRS PHR for one or more SRS processes and then transmit one or more SRS PHRs to one or more network nodes for each of one or more SRS processes at the UE.

Moreover, the technology disclosed herein may concern and/or involve methods in one or more network nodes for triggering UE uplink reference signal-specific transmit power report(s) from a UE, e.g., SRS PHR(s). Again, using a SRS PHR as a non-limiting example for description purposes, SRS PHR(s) are received from a UE for each SRS process. The network node may determine from one or more received PHR(s) if the UE is power limited or close to power limited when transmitting SRS. The network node may also use received SRS PHR(s) from a UE to determine uplink channel quality and/or path loss associated with the UE, e.g., by combining estimated UE SRS transmit power based on the PHR with an estimate of received power for the SRS signal received at the network node.

Additionally, according to the technology disclosed herein, a network node may optionally determine whether a PHR for a UE SRS process is unavailable, inaccurate, or out of date, and if so, send an SRS PHR trigger message to the UE. Alternatively, one or more conditions may simply be detected by the UE or the network node as an SRS PHR trigger. In response to the SRS PHR trigger, the network node receives one or more SRS PHRs from one or more UEs and uses the SRS PHR, e.g., as described above.

As used herein, the term "node" and/or "network node" may encompass nodes using any technology including, e.g., high speed packet access (HSPA), long-term evolution (LTE), code-division multiple access (CDMA) 2000, GSM, etc. or a mixture of technologies such as with a multi-standard radio (MSR) node (e.g., LTE/HSPA, GSM/HS/LTE, CDMA2000/LTE, etc). Furthermore, the technology described herein may apply to different types of nodes e.g., base station, eNode B, Node B, relay, base transceiver station (BTS), donor node serving a relay node (e.g., donor base station, donor Node B, donor eNB), supporting one or more radio access technologies, and transmit and receive points in a CoMP context.

Note that examples and/or embodiments described herein are not mutually exclusive. Rather, concepts and components from one example and/or embodiment may be combined with other examples and/or embodiments.

Example advantages of the technology and embodiments herein include the fact that the power control mechanism for the UE's reference signaling, e.g., SRS, is separated from other uplink channels, e.g., the PUSCH, and thus functions independently of the uplink channel. This is important when the uplink and downlink are decoupled, which is a typical case in a heterogeneous network scenario, and in any situation where the UE reference signaling power control must be able to function as a separate power control entity. In an LTE specific application, because a network node can now know the transmit power level of the SRS for a specific UE/SRS process, the node can combine this power level with the already known power level of the PUSCH to improve link adaptation of the PUSCH. Other example applications for an independent power control for SRS as compared to, e.g., PUSCH, include targeting different reception point(s) with SRS as compared to UL data channels.

Embodiments herein may relate to a method performed by a base station comprised in a cellular system, such as a telecommunications system for mobile communications, the base station, a method performed by a user equipment, and the user equipment. In particular, embodiments herein may be applied for or in the context of cell reselection for the user equipment.

Embodiments herein have been described above with reference to the drawings, such as block diagrams and/or flowcharts. It is understood that several blocks of the block diagrams and/or flowchart illustrations, and combinations of blocks in the block diagrams and/or flowchart illustrations, may be implemented by computer program instructions. Such computer program instructions may be provided to a processor of a general purpose computer, a special purpose computer and/or other programmable data processing apparatus, e.g. any processor or processing unit described above, just to mention some example.

The computer program instructions may be provided to produce a machine, such that the instructions, which execute via a processor of a computer and/or other programmable data processing apparatus, create means for implementing the functions/acts specified in the block diagrams and/or flowchart block or blocks of the present disclosure.

As already mentioned, the above-mentioned computer program instructions may be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks of the present disclosure.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks of the present disclosure.

As used herein, the term "memory" may refer to a hard disk, a magnetic storage medium, a portable computer diskette or disc, flash memory, random access memory (RAM) or the like. Furthermore, the memory may be an internal register memory of a processor.

As used herein, the expression "configured to" may mean that a processing circuit is configured to, or adapted to, by means of software or hardware configuration, perform one or more of the actions described herein.

As used herein, the terms "number", "value" may be any kind of digit, such as binary, real, imaginary or rational number or the like. Moreover, "number", "value" may be one or more characters, such as a letter or a string of letters. "number", "value" may also be represented by a bit string.

As used herein, the expression "in some embodiments" has been used to indicate that the features of the embodiment described may be combined with any other embodiment disclosed herein.

As used herein, the expression "transmit" and "send" are typically interchangeable. These expressions may include transmission by broadcasting, uni-casting, group-casting and the like. In this context, a transmission by broadcasting may be received and decoded by any authorized device within range. In case of uni-casting, one specifically addressed device may receive and encode the transmission. In case of group-casting, a group of specifically addressed devices may receive and decode the transmission.

When using the word "comprise" or "comprising" it shall be interpreted as non-limiting, i.e. meaning "consist at least of".

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation.

**Claims**

1. A method, performed by a wireless terminal (10, 210), for handling uplink transmit power reporting in a radio access network (2, 202) of a cellular radio system (1, 201), wherein the method comprises:

   - providing (402, 1402) a respective transmit power report for at least one of multiple uplink reference signal transmission configurations comprised in the wireless terminal (10, 210), each of the multiple uplink reference signal transmission configurations configuring transmission, by the wireless terminal (10, 210), of an uplink reference signal, the respective transmit power report providing information about a transmit power used by the wireless terminal (10, 210) for transmitting the uplink reference signal on a carrier and a power headroom report assuming Physical Uplink Shared Channel, PUSCH, transmission or PUSCH and Physical Uplink Control Channel, PUCCH, transmission on the carrier, wherein said at least one of the multiple uplink reference signal transmission configurations is associated with a respective path loss measurement by the wireless terminal (10, 210), and wherein the transmit power of the uplink reference signal, according to said at least one of the multiple uplink reference signal transmission configurations, is based on the respective path loss measurement associated with said at least one of the multiple uplink reference signal transmission configurations, and
   - sending (403, 1403) the respective transmit power report and the power headroom report to one or more network nodes (12, 212, 14, 214) of the cellular radio system (1, 201).

2. The method as claimed in claim 1, wherein the respective path loss measurement is based on a specific downlink reference radio resource.

3. The method as claimed in any one of claims 1-2, wherein the method further comprises:

   - transmitting (404, 1404), for receipt by the one or more network nodes (12, 212, 14, 214), the uplink reference signal according to said at least one of the multiple uplink reference signal transmission configurations.

4. The method as claimed in any one of claims 1-3, wherein said respective transmit power report comprises a respective identifier identifying said at least one of the multiple uplink reference signal transmission configurations.

5. The method as claimed in any one of claims 1-4, wherein the method further comprises:

   - obtaining (401, 1401) a trigger triggering the provision of the respective transmit power report.

6. The method as claimed in claim 5, wherein obtaining (401, 1401) the trigger comprises receiving a trigger message from a first network node (12, 212) of the one or more network nodes (12, 212, 14, 214) or the wireless terminal (10, 210) detecting one or more conditions as the trigger.

7. The method as claimed in any one of the preceding claims, wherein each of the multiple uplink reference signal transmission configurations comprises a set of parameters that indicates one or more of the following:

   how transmission of the uplink reference signal is triggered,
   how transmission of the uplink reference signal has its path loss estimate defined,
   whether transmission of the uplink reference signal is unique for a certain frequency carrier,
   which time and/or frequency resources should be used for transmission of the uplink reference signal,
   what timing alignment if any is needed, and/or
   whether each of the multiple uplink reference signal transmission configurations has a corresponding uplink reference signal specific power-control loop.

8. The method as claimed in any one of the preceding claims, wherein the respective transmit power report comprises a respective power headroom report, PHR, and the uplink reference signal comprises a sounding reference signal, SRS.

9. A computer program (1801a) that when executed by a processor (1505) causes a wireless terminal (10, 210) to perform the method according to any one of claims 1-8.

10. A method, performed by a network node (12, 212), for handling uplink transmit power reporting in a radio access network (2, 202) of a cellular radio system (1, 201), the network node (12, 212) being comprised in the cellular radio system (1, 201), wherein the method comprises:

- receiving (403, 1602), from a wireless terminal (10, 210), a respective transmit power report for at least one of multiple uplink reference signal transmission configurations comprised in the wireless terminal (10, 210), each of the multiple uplink reference signal transmission configurations configuring transmission, by the wireless terminal (10, 210), of an uplink reference signal, the respective transmit power report providing information about a transmit power used by the wireless terminal (10, 210) for transmitting the uplink reference signal on a carrier and a power headroom report assuming Physical Uplink Shared Channel, PUSCH, transmission or PUSCH and Physical Uplink Control Channel, PUCCH, transmission on the carrier, wherein said at least one of the multiple uplink reference signal transmission configurations is associated with a respective path loss measurement by the wireless terminal (10, 210), and wherein the transmit power of the uplink reference signal, according to said at least one of the multiple uplink reference signal transmission configurations, is based on the respective path loss measurement associated with said at least one of the multiple uplink reference signal transmission configurations.

11. A computer program (1801b) that when executed by a processor (1704) causes a network node (12, 212) to perform the method according to claim 10.

12. A wireless terminal (10, 210) for handling uplink transmit power reporting in a radio access network (2, 202) of a cellular radio system (1, 201), wherein the wireless terminal (10, 210) is configured to:

- provide a respective transmit power report for at least one of multiple uplink reference signal transmission configurations comprised in the wireless terminal (10, 210), each of the multiple uplink reference signal transmission configurations configuring transmission, by the wireless terminal (10, 210), of an uplink reference signal, the respective transmit power report providing information about a transmit power used by the wireless terminal (10, 210) for transmitting the uplink reference signal on a carrier and a power headroom report assuming Physical Uplink Shared Channel, PUSCH, transmission or PUSCH and Physical Uplink Control Channel, PUCCH, transmission on the carrier, wherein said at least one of the multiple uplink reference signal transmission configurations is associated with a respective path loss measurement by the wireless terminal (10, 210), and wherein the transmit power of the uplink reference signal, according to said at least one of the multiple uplink reference signal transmission configurations, is based on the respective path loss measurement associated with said at least one of the multiple uplink reference signal transmission configurations, and
- send the respective transmit power report and the power headroom report to one or more network nodes (12, 212, 14, 214) of the cellular radio system (1, 201).

13. A network node (12, 212) for handling uplink transmit power reporting in a radio access network (2, 202) of a cellular radio system (1, 201), the network node (12, 212) being configured to be comprised in the cellular radio system (1, 201), wherein the network node (12, 212) is further configured to:

- receive, from a wireless terminal (10, 210), a respective transmit power report for at least one of multiple uplink reference signal transmission configurations comprised in the wireless terminal (10, 210), each of the multiple uplink reference signal transmission configurations configuring transmission, by the wireless terminal (10, 210), of an uplink reference signal, the respective transmit power report providing information about a transmit power used by the wireless terminal (10, 210) for transmitting the uplink reference signal on a carrier and a power headroom report assuming Physical Uplink Shared Channel, PUSCH, transmission or PUSCH and Physical Uplink Control Channel, PUCCH, transmission on the carrier, wherein said at least one of the multiple uplink reference signal transmission configurations is associated with a respective path loss measurement by the wireless terminal (10, 210), and wherein the transmit power of the uplink reference signal, according to said at least one of the multiple uplink reference signal transmission configurations, is based on the respective path loss measurement associated with said at least one of the multiple uplink reference signal transmission configurations.

## EP 2 944 134 B1

**Patentansprüche**

1. Verfahren, durchgeführt von einem drahtlosen Endgerät (10, 210), zum Handhaben von Uplink-Sendeleistungsmeldungen in einem Funkzugangsnetz (2, 202) eines zellularen Funksystems (1, 201), wobei das Verfahren Folgendes umfasst:

   - Bereitstellen (402, 1402) einer jeweiligen Sendeleistungsmeldung für mindestens eine von mehreren Uplink- Referenzsignalübertragungskonfigurationen, die in dem drahtlosen Endgerät (10, 210) umfasst sind, wobei jede der mehreren Uplink-Referenzsignalübertragungskonfigurationen die Übertragung, durch das drahtlose Endgerät (10, 210), eines Uplink-Referenzsignals konfiguriert, wobei die jeweilige Sendeleistungsmeldung Informationen über eine Sendeleistung, die von dem drahtlosen Endgerät (10, 210) zum Übertragen des Uplink- Referenzsignals auf einem Träger verwendet wird, und eine Leistungsreservemeldung, die eine Übertragung auf dem gemeinsamen physikalischen Uplink-Kanal, PUSCH, oder eine Übertragung auf PUSCH und dem physikalischen Uplink-Steuerkanal, PUCCH, auf dem Träger annimmt, bereitstellt, wobei die mindestens eine der mehreren Uplink-Referenzsignalübertragungskonfigurationen mit einer jeweiligen Pfadverlustmessung durch das drahtlose Endgerät (10, 210) assoziiert ist und wobei die Sendeleistung des Uplink-Referenzsignals gemäß der mindestens einen der mehreren Uplink-Referenzsignalübertragungskonfigurationen auf der jeweiligen mit der mindestens einen der mehreren Uplink-Referenzsignalübertragungskonfigurationen assoziierten Pfadverlustmessung beruht, und
   - Senden (403, 1403) der jeweiligen Sendeleistungsmeldung und der Leistungsreservemeldung an einen oder mehrere Netzknoten (12, 212, 14, 214) des zellularen Funksystems (1, 201).

2. Verfahren nach Anspruch 1, wobei die jeweilige Pfadverlustmessung auf einer spezifischen Downlink-Referenzfunkressource beruht.

3. Verfahren nach einem der Ansprüche 1-2, wobei das Verfahren ferner Folgendes umfasst:

   - Übertragen (404, 1404), zum Empfang durch den einen oder die mehreren Netzknoten (12, 212, 14, 214), des Uplink-Referenzsignals gemäß der mindestens einen der mehreren Uplink-Referenzsignalübertragungskonfigurationen.

4. Verfahren nach einem der Ansprüche 1-3, wobei die jeweilige Sendeleistungsmeldung eine jeweilige Kennung umfasst, welche die mindestens eine der mehreren Uplink-Referenzsignalübertragungskonfigurationen identifiziert.

5. Verfahren nach einem der Ansprüche 1-4, wobei das Verfahren ferner Folgendes umfasst:

   - Erhalten (401, 1401) eines Auslösers, der die Bereitstellung der jeweiligen Sendeleistungsmeldung auslöst.

6. Verfahren nach Anspruch 5, wobei das Erhalten (401, 1401) des Auslösers Empfangen einer Auslösenachricht von einem ersten Netzknoten (12, 212) von dem einen oder den mehreren Netzknoten (12, 212, 14, 214) oder dem drahtlosen Endgerät (10, 210), der bzw. das eine oder mehrere Bedingungen als den Auslöser erkennt, umfasst.

7. Verfahren nach einem der vorherigen Ansprüche, wobei jede der mehreren Uplink-Referenzsignalübertragungskonfigurationen einen Satz von Parametern umfasst, der eines oder mehrere der Folgenden angibt:

   wie die Übertragung des Uplink-Referenzsignals ausgelöst wird,
   wie die Pfadverlustschätzung für die Übertragung des Uplink-Referenzsignals definiert ist,
   ob die Übertragung des Uplink-Referenzsignals für einen bestimmten Frequenzträger eindeutig ist,
   welche Zeit- und/oder Frequenzressourcen zur Übertragung des Uplink-Referenzsignals verwendet werden sollten,
   welche Taktabstimmung, wenn überhaupt, benötigt wird, und/oder ob jede der mehreren Uplink-Referenzsi- nalübertragungskonfigurationen eine entsprechende für das Uplink-Referenzsignal spezifische Leistungsregelungsschleife aufweist.

8. Verfahren nach einem der vorhergehenden Ansprüche, wobei die jeweilige Sendeleistungsmeldung eine jeweilige Leistungsreservemeldung, PHR, umfasst und das Uplink-Referenzsignal ein Sondierungsreferenzsignal, SRS, um- fasst.

22

9. Computerprogramm (1801a), das bei Ausführung durch einen Prozessor (1505) eine drahtlose Vorrichtung (10, 210) dazu veranlasst, das Verfahren gemäß einem der Ansprüche 1-8 durchzuführen.

10. Verfahren, durchgeführt von einem Netzknoten (12, 212), zum Handhaben von Uplink-Sendeleistungsmeldungen in einem Funkzugangsnetz (2, 202) eines zellularen Funksystems (1, 201), wobei der Netzknoten (12, 212) in dem zellularen Funksystem (1, 201) umfasst ist, wobei das Verfahren Folgendes umfasst:

    - Empfangen (403, 1602), von einem drahtlosen Endgerät (10, 210), einer jeweiligen Sendeleistungsmeldung für mindestens eine von mehreren Uplink-Referenzsignalübertragungskonfigurationen, die in dem drahtlosen Endgerät (10, 210) umfasst sind, wobei jede der mehreren Uplink-Referenzsignalübertragungskonfigurationen die Übertragung, durch das drahtlose Endgerät (10, 210), eines Uplink-Referenzsignals konfiguriert, wobei die jeweilige Sendeleistungsmeldung Informationen über eine Sendeleistung, die von dem drahtlosen Endgerät (10, 210) zum Übertragen des Uplink-Referenzsignals auf einem Träger verwendet wird, und eine Leistungsreservemeldung, die eine Übertragung auf dem gemeinsamen physikalischen Uplink-Kanal, PUSCH, oder eine Übertragung auf PUSCH und dem physikalischen Uplink-Steuerkanal, PUCCH, auf dem Träger annimmt, bereitstellt, wobei die mindestens eine der mehreren Uplink-Referenzsignalübertragungskonfigurationen mit einer jeweiligen Pfadverlustmessung durch das drahtlose Endgerät (10, 210) assoziiert ist und wobei die Sendeleistung des Uplink-Referenzsignals gemäß der mindestens einen der mehreren Uplink-Referenzsignalübertragungskonfigurationen auf der jeweiligen mit der mindestens einen der mehreren Uplink-Referenzsignalübertragungskonfigurationen assoziierten Pfadverlustmessung beruht.

11. Computerprogramm (1801b), das bei Ausführung durch einen Prozessor (1704) einen Netzknoten (12, 212) dazu veranlasst, das Verfahren nach Anspruch 10 durchzuführen.

12. Drahtloses Endgerät (10, 210) zum Handhaben von Uplink-Sendeleistungsmeldungen in einem Funkzugangsnetz (2, 202) eines zellularen Funksystems (1, 201), wobei das drahtlose Endgerät (10, 210) konfiguriert ist zum:

    - Bereitstellen einer jeweiligen Sendeleistungsmeldung für mindestens eine von mehreren Uplink-Referenzsignalübertragungskonfigurationen, die in dem drahtlosen Endgerät (10, 210) umfasst sind, wobei jede der mehreren Uplink-Referenzsignalübertragungskonfigurationen die Übertragung, durch das drahtlose Endgerät (10, 210), eines Uplink-Referenzsignals konfiguriert, wobei die jeweilige Sendeleistungsmeldung Informationen über eine Sendeleistung, die von dem drahtlosen Endgerät (10, 210) zum Übertragen des Uplink-Referenzsignals auf einem Träger verwendet wird, und eine Leistungsreservemeldung, die eine Übertragung auf dem gemeinsamen physikalischen Uplink-Kanal, PUSCH, oder eine Übertragung auf PUSCH und dem physikalischen Uplink-Steuerkanal, PUCCH, auf dem Träger annimmt, bereitstellt, wobei die mindestens eine der mehreren Uplink-Referenzsignalübertragungskonfigurationen mit einer jeweiligen Pfadverlustmessung durch das drahtlose Endgerät (10, 210) assoziiert ist und wobei die Sendeleistung des Uplink-Referenzsignals gemäß der mindestens einen der mehreren Uplink-Referenzsignalübertragungskonfigurationen auf der jeweiligen mit der mindestens einen der mehreren Uplink-Referenzsignalübertragungskonfigurationen assoziierten Pfadverlustmessung beruht, und
    - Senden der jeweiligen Sendeleistungsmeldung und der Leistungsreservemeldung an einen oder mehrere Netzknoten (12, 212, 14, 214) des zellularen Funksystems (1, 201).

13. Netzknoten (12, 212) zum Handhaben von Uplink-Sendeleistungsmeldungen in einem Funkzugangsnetz (2, 202) eines zellularen Funksystems (1, 201), wobei der Netzknoten (12, 212) derart konfiguriert ist, dass er in dem zellularen Funksystem (1, 201) umfasst ist, wobei der Netzknoten (12, 212) ferner konfiguriert ist zum:

    - Empfangen, von einem drahtlosen Endgerät (10, 210), einer jeweiligen Sendeleistungsmeldung für mindestens eine von mehreren Uplink-Referenzsignalübertragungskonfigurationen, die in dem drahtlosen Endgerät (10, 210) umfasst sind, wobei jede der mehreren Uplink-Referenzsignalübertragungskonfigurationen die Übertragung, durch das drahtlose Endgerät (10, 210), eines Uplink-Referenzsignals konfiguriert, wobei die jeweilige Sendeleistungsmeldung Informationen über eine Sendeleistung, die von dem drahtlosen Endgerät (10, 210) zum Übertragen des Uplink-Referenzsignals auf einem Träger verwendet wird, und eine Leistungsreservemeldung, die eine Übertragung auf dem gemeinsamen physikalischen Uplink-Kanal, PUSCH, oder eine Übertragung auf PUSCH und dem physikalischen Uplink-Steuerkanal, PUCCH, auf dem Träger annimmt, bereitstellt, wobei die mindestens eine der mehreren Uplink-Referenzsignalübertragungskonfigurationen mit einer jeweiligen Pfadverlustmessung durch das drahtlose Endgerät (10, 210) assoziiert ist und wobei die Sendeleistung des Uplink-Referenzsignals gemäß der mindestens einen der mehreren Uplink-Referenzsignalübertragungskonfigurationen auf der jeweiligen mit der mindestens einen der mehreren Uplink-Referenzsignalübertragungskonfigurationen assoziierten Pfadverlustmessung beruht.

**Revendications**

1. Procédé, exécuté par un terminal sans fil (10, 210), pour prendre en charge un rapport sur la puissance d'émission de liaison montante dans un réseau d'accès radio (2, 202) d'un système radio cellulaire (1, 201), dans lequel le procédé comprend :

   - la fourniture (402, 1402) d'un rapport sur la puissance d'émission respectif pour au moins l'une de multiples configurations d'émission de signal de référence de liaison montante comprises dans le terminal sans fil (10, 210), chacune des multiples configurations d'émission de signal de référence de liaison montante configurant l'émission, par le terminal sans fil (10, 210), d'un signal de référence de liaison montante, le rapport sur la puissance d'émission respectif fournissant des informations sur une puissance d'émission utilisée par le terminal sans fil (10, 210) pour émettre le signal de référence de liaison montante sur une porteuse et un rapport de marge de puissance supposant une émission par canal partagé de liaison montante physique, PUSCH, ou une émission par PUSCH et par canal de commande de liaison montante physique, PUCCH, sur la porteuse, dans lequel ladite au moins une des multiples configurations d'émission de signal de référence de liaison montante est associée à une mesure de perte de trajet respective par le terminal sans fil (10, 210), et dans lequel la puissance d'émission du signal de référence de liaison montante, en fonction de ladite au moins une des multiples configurations d'émission de signal de référence de liaison montante, est basée sur la mesure de perte de trajet respective associée à ladite au moins une des multiples configurations d'émission de signal de référence de liaison montante, et
   - l'envoi (403, 1403) du rapport sur la puissance d'émission respectif et du rapport de marge de puissance à un ou plusieurs nœuds de réseau (12, 212, 14, 214) du système radio cellulaire (1, 201).

2. Procédé selon la revendication 1, dans lequel la mesure de perte de trajet respective est basée sur une ressource radio de référence de liaison descendante spécifique.

3. Procédé selon l'une quelconque des revendications 1 et 2, dans lequel le procédé comprend en outre :

   - l'émission (404, 1404), pour réception par les un ou plusieurs nœuds de réseau (12, 212, 14, 214), du signal de référence de liaison montante en fonction de ladite au moins une des multiples configurations d'émission de signal de référence de liaison montante.

4. Procédé selon l'une quelconque des revendications 1 à 3, dans lequel ledit rapport sur la puissance d'émission respectif comprend un identifiant respectif identifiant ladite au moins une des multiples configurations d'émission de signal de référence de liaison montante.

5. Procédé selon l'une quelconque des revendications 1 à 4, dans lequel le procédé comprend en outre :

   - l'obtention (401, 1401) d'un déclencheur déclenchant la fourniture du rapport sur la puissance d'émission respectif.

6. Procédé selon la revendication 5, dans lequel l'obtention (401, 1401) du déclencheur comprend la réception d'un message de déclenchement provenant d'un premier nœud de réseau (12, 212) des un ou plusieurs nœuds de réseau (12, 212, 14, 214) ou du terminal sans fil (10, 210) détectant une ou plusieurs conditions en tant que déclencheur.

7. Procédé selon l'une quelconque des revendications précédentes, dans lequel chacune des multiples configurations d'émission de signal de référence de liaison montante comprend un ensemble de paramètres qui indique un ou plusieurs des éléments suivants :

   comment l'émission du signal de référence de liaison montante est déclenchée,
   comment l'émission du signal de référence de liaison montante voit son estimation de perte de trajet définie,
   si l'émission du signal de référence de liaison montante est unique pour une porteuse de fréquence donnée,
   quelles ressources de temps et/ou de fréquence doivent être utilisées pour l'émission du signal de référence de liaison montante,

quel alignement temporel est nécessaire le cas échéant, et/ou si chacune des multiples configurations d'émission de signal de référence de liaison montante possède une boucle de commande de puissance spécifique de signal de référence de liaison montante correspondante.

**8.** Procédé selon l'une quelconque des revendications précédentes, dans lequel le rapport sur la puissance d'émission respectif comprend un rapport de marge de puissance respectif, PHR, et le signal de référence de liaison montante comprend un signal de référence de sondage, SRS.

**9.** Programme informatique (1801a) qui, lorsqu'il est exécuté par un processeur (1505), amène un terminal sans fil (10, 210) à exécuter le procédé selon l'une quelconque des revendications 1 à 8.

**10.** Procédé, exécuté par un nœud de réseau (12, 212), pour prendre en charge un rapport sur la puissance d'émission de liaison montante dans un réseau d'accès radio (2, 202) d'un système radio cellulaire (1, 201), le nœud de réseau (12, 212) étant compris dans le système radio cellulaire (1, 201), dans lequel le procédé comprend :

- la réception (403, 1602), à partir d'un terminal sans fil (10, 210), d'un rapport sur la puissance d'émission respectif pour au moins l'une de multiples configurations d'émission de signal de référence de liaison montante comprises dans le terminal sans fil (10, 210), chacune des multiples configurations d'émission de signal de référence de liaison montante configurant l'émission, par le terminal sans fil (10, 210), d'un signal de référence de liaison montante, le rapport sur la puissance d'émission respectif fournissant des informations sur une puissance d'émission utilisée par le terminal sans fil (10, 210) pour émettre le signal de référence de liaison montante sur une porteuse et un rapport de marge de puissance supposant une émission par canal partagé de liaison montante physique, PUSCH, ou une émission par PUSCH et par canal de commande de liaison montante physique, PUCCH, sur la porteuse, dans lequel ladite au moins une des multiples configurations d'émission de signal de référence de liaison montante est associée à une mesure de perte de trajet respective par le terminal sans fil (10, 210), et dans lequel la puissance d'émission du signal de référence de liaison montante, en fonction de ladite au moins une des multiples configurations d'émission de signal de référence de liaison montante, est basée sur la mesure de perte de trajet respective associée à ladite au moins une des multiples configurations d'émission de signal de référence de liaison montante.

**11.** Programme informatique (1801b) qui, lorsqu'il est exécuté par un processeur (1704), amène un nœud de réseau (12, 212) à exécuter le procédé selon la revendication 10.

**12.** Terminal sans fil (10, 210) pour prendre en charge un rapport sur la puissance d'émission de liaison montante dans un réseau d'accès radio (2, 202) d'un système radio cellulaire (1, 201), dans lequel le terminal sans fil (10, 210) est configuré pour :

- fournir un rapport sur la puissance d'émission respectif pour au moins l'une de multiples configurations d'émission de signal de référence de liaison montante comprises dans le terminal sans fil (10, 210), chacune des multiples configurations d'émission de signal de référence de liaison montante configurant l'émission, par le terminal sans fil (10, 210), d'un signal de référence de liaison montante, le rapport sur la puissance d'émission respectif fournissant des informations sur une puissance d'émission utilisée par le terminal sans fil (10, 210) pour émettre le signal de référence de liaison montante sur une porteuse et un rapport de marge de puissance supposant une émission par canal partagé de liaison montante physique, PUSCH, ou une émission par PUSCH et par canal de commande physique de liaison montante, PUCCH, sur la porteuse, dans lequel ladite au moins une des multiples configurations d'émission de signal de référence de liaison montante est associée à une mesure de perte de trajet respective par le terminal sans fil (10, 210), et dans lequel la puissance d'émission du signal de référence de liaison montante, en fonction de ladite au moins une des multiples configurations d'émission de signal de référence de liaison montante, est basée sur la mesure de perte de trajet respective associée à ladite au moins une des multiples configurations d'émission de signal de référence de liaison montante, et

- envoyer le rapport sur la puissance d'émission respectif et le rapport de marge de puissance à un ou plusieurs nœuds de réseau (12, 212, 14, 214) du système radio cellulaire (1, 201).

**13.** Nœud de réseau (12, 212) pour prendre en charge un rapport sur la puissance d'émission de liaison montante dans un réseau d'accès radio (2, 202) d'un système radio cellulaire (1, 201), le nœud de réseau (12, 212) étant configuré pour être compris dans le système radio cellulaire (1, 201), dans lequel le nœud de réseau (12, 212) est en outre configuré pour :

- recevoir, à partir d'un terminal sans fil (10, 210), un rapport sur la puissance d'émission respectif pour au moins l'une de multiples configurations d'émission de signal de référence de liaison montante comprises dans le terminal sans fil (10, 210), chacune des multiples configurations d'émission de signal de référence de liaison montante configurant l'émission, par le terminal sans fil (10, 210), d'un signal de référence de liaison montante, le rapport sur la puissance d'émission respectif fournissant des informations sur une puissance d'émission utilisée par le terminal sans fil (10, 210) pour émettre le signal de référence de liaison montante sur une porteuse et un rapport de marge de puissance supposant une émission par canal partagé de liaison montante physique, PUSCH, ou une émission par PUSCH et par canal de commande de liaison montante physique, PUCCH, sur la porteuse, dans lequel ladite au moins une des multiples configurations d'émission de signal de référence de liaison montante est associée à une mesure de perte de trajet respective par le terminal sans fil (10, 210), et dans lequel la puissance d'émission du signal de référence de liaison montante, en fonction de ladite au moins une des multiples configurations d'émission de signal de référence de liaison montante, est basée sur la mesure de perte de trajet respective associée à ladite au moins une des multiples configurations d'émission de signal de référence de liaison montante.

Cluster of femto cells

Pico cell

Relay

Fig. 1

201, 202

210

214

212

211

Fig. 2

Fig. 3

210 First wireless
terminal

212 First network node

401 Obtain trigger message

402 Provide respective
transmit power report for at
least one of multiple uplink
reference signal transmission
configurations

403 Transmit power report(s)

404 Uplink reference signal

405 Determine uplink quality
and/or path loss

Fig. 4

One subframe

Control region

Control signaling

Reference symbols

Fig. 5

15kHz

reference signal

reference signal

180 kHz

1 ms subframe

Fig. 6

Network Node

S1

Determine that a PHR for a UE SRS process is unavailable, inaccurate, out of date, and if so, trigger an SRS PHR from UE, e.g., via control signaling.

S2

Or determine condition(s) apply for UE to report SRS PHR, and if so, trigger an SRS PHR from UE.

S3

Receive one or more SRS PHRs from one or more UEs.

S4

Use information in PHR, e.g., to determine if UE is power limited when transmitting a certain SRS resource, estimate UL quality, etc.

Fig. 7

UE

Receive or detect SRS trigger, e.g., from network signaling and/or if a condition satisfied.     S10

Calculate an SRS PHR for one or more SRS processes.     S11

Send one or more SRS PHRs to network for one or more SRS processes.     S12

Fig. 8

Rel-x

| Index | LCID values |
|-------|-------------|
| 00000 | CCCH |
| 00001-01010 | Identity of the logical channel |
| 01011-10111 | Reserved |
| 11000 | SRS Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

Fig. 9

Fig. 10a

Fig. 10b

Fig. 11

| FIRST NETWORK NODE | 12 | SECOND NETWORK NODE | 14 |

SRS$_1$ PHR

SRS Trigger

SRS Trigger

SRS$_2$ PHR

1, 2

10

RADIO COMMUNICATIONS CIRCUITRY    20

SRS POWER HEADROOM PROCESSOR    22

SRS PROCESS    24

SRS PROCESS    26

23

DATA AND SIGNALING PROCESSOR(S)

28    USER INTERFACE(S)

UE TERMINAL

Fig. 12

Fig. 13

Start

1401 Obtain trigger

1402 Provide respective transmit power report for at least one of multiple uplink reference signal transmission configurations

1403 Send respective transmit power report

End

1404 Transmit uplink reference signal according to said at least one uplink reference signal transmission configuration

End

Fig. 14

First wireless terminal 210

Processing unit 1507

Processor 1505

Memory 1506

Receiving port 1501

Obtaining circuitry 1502

Providing circuitry 1503

Sending port 1504

Fig. 15

```
                              ┌──────────┐
                              │  Start   │
                              └────┬─────┘
                        ┌──────────┴──────────┐
                        ▼                     │
                ┌───────────────┐             │
                │ 1601 Send     │             │
                │ trigger       │             │
                └───────┬───────┘             │
                        ▼                     ▼
        ┌─────────────────────────────────────────┐          ┌──────────┐
        │ 1602 Receive respective transmit        │ ───────▶ │   End    │
        │ power report for at least one of        │          └──────────┘
        │ multiple uplink reference signal        │
        │ transmission configurations             │
        └────────────────────┬────────────────────┘
                             ▼
        ┌─────────────────────────────────────────┐          ┌──────────┐
        │ 1603 Receive uplink reference           │ ───────▶ │   End    │
        │ signal according to said at least       │          └──────────┘
        │ one uplink reference signal             │
        │ transmission configuration              │
        └────────────────────┬────────────────────┘
                             ▼
        ┌─────────────────────────────────────────┐
        │ 1604 Determine uplink quality           │
        │ and/or path loss                        │
        └────────────────────┬────────────────────┘
                             ▼
                        ┌──────────┐
                        │   End    │
                        └──────────┘
```

Fig. 16

Fig. 17

1802a,b                1801a,b

## Fig. 18a

1803a,b              1801a,b

## Fig. 18b

1804a,b

1801a,b        1805a,b        210; 212

## Fig. 18c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012020539 A1

- WO 2012149968 A1